# FASCICULE DE BREVET EUROPEEN

(11) **EP 4 359 102 B1**
(45) Date de publication et mention de la délivrance du brevet: **04.06.2025**
(21) Numéro de dépôt: 22747073.9
(22) Date de dépôt: 24.06.2022
(51) Int. Cl.: B01D 21/02, B01D 21/24, B01D 21/30, B21B 45/00, C10M 175/00

(54) **INSTALLATION ET PROCEDE DE RECYCLAGE ET DE FILTRATION D'HUILE DE LAMINAGE**
ANLAGE UND VERFAHREN ZUR RÜCKFÜHRUNG UND FILTERUNG VON WALZÖL
PLANT AND METHOD FOR RECYCLING AND FILTERING ROLLING OIL

(30) Priorité: 25.06.2021 FR 2106829
(43) Date de publication de la demande: 01.05.2024
(73) Titulaire: Fives DMS, 59260 Lezennes (FR)
(72) Inventeur: ERNST DE LA GRAETE, Conrad, 59472 SECLIN (FR)
(74) Mandataire: Novagraaf Group
(86) Numéro de dépôt international: PCT/FR2022/051260
(87) Numéro de publication internationale: WO 2022/269212

(56) Documents cités:
- CN-A- 101 368 662
- CN-A- 103 191 600
- DE-U1- 29 911 482
- FR-A1- 3 027 528
- "Back-flushable filter cartridges for rolling oil filtration in stainless steel cold rolling mills", 21 November 2013 (2013-11-21), XP055197007, Retrieved from the Internet <URL:http://www.hydac.com.br/wp-content/uploads/e7219-0-11-13_dekarheo_web.pdf> [retrieved on 20150619]

## Description

La présente divulgation est relative à un procédé de recyclage et de filtration d'huile de laminage mis en œuvre pour un laminoir nécessitant un débit nominal d'huile de laminage compris entre 4000 I/min et 30000 I/min, ainsi qu'une installation de recyclage et de filtration de laminage en tant que telle.

### Domaine technique

Le domaine de l'invention est celui de la filtration de l'huile de laminage dans les laminoirs à froid, et plus particulièrement les laminoirs « Sendzimir », en particulier à vingt cylindres, connus sous l'appellation « 20-Hi » pour l'homme du métier. Un exemple de réalisation d'un tel laminoir à vingt cylindres est illustré dans les documents US 5 193 377 et US 5 471 859. Dans un tel laminoir, les cylindres sont répartis en un groupe inférieur et un groupe supérieur plus précisément, ces groupes présentent une structure symétrique et comportent chacun dix cylindres dont : un cylindre de travail, deux premiers cylindres intermédiaires, trois seconds cylindres intermédiaires, et quatre cylindres d'appui, ou galets d'appui, qui sont à l'extérieur de l'arrangement.

Dans un laminoir, en particulier dans un laminoir à 20 cylindres, les opérations de laminage sont effectuées en projetant de l'huile sur les cylindres et la bande, et en particulier sur les cylindres de travail entre lesquels la bande métallique est laminée. Les opérations de laminage génèrent une grande quantité de particules métalliques provenant notamment des frottements entre les cylindres et la bande, particules qui se trouvent entrainées dans le flux d'huile en aval du laminoir.

Cette opération de lubrification et/ou de refroidissement est mise en œuvre par une installation de filtration et recyclage qui permet de récupérer l'huile de laminage chargée en particules métalliques, de la filtrer afin de la nettoyer des particules métalliques en suspension, puis de recycler l'huile filtrée débarrassée des particules métalliques.

Disposer d'une huile filtrée exempte de particules métalliques, de haute qualité, permet de laminer la bande avec obtention d'un état de surface présentant une faible rugosité, réfléchissante ou hautement réfléchissante. A défaut, les particules en suspension dans l'huile sont abrasives pour la bande métallique, et viennent accroitre la rugosité de la bande lors des opérations de laminage.

La présente divulgation s'intéresse plus particulièrement aux installations de recyclage et de filtration configurée pour assurer un débit nominal d'huile filtrée au laminoir compris entre 4000 l/min et 30 000 l/min, et en particulier entre 8000 l/min et 27000 l/min.

### Technique antérieure

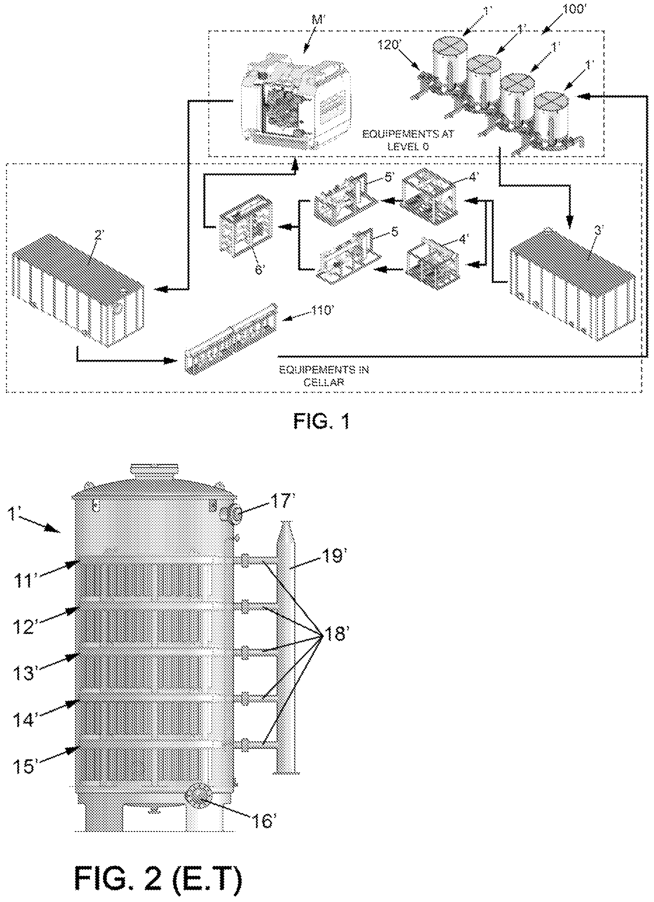

La figure 1 divulgue le système filtration primaire une installation de recyclage et de filtration d'huile, connue de l'état de la technique, convenant pour alimenter un laminoir 20Hi d'un débit d'huile filtrée de 12 000 I/min, dont l'architecture est décrite ci-après, ainsi que ses inconvénients.

L'installation présente un circuit de filtration primaire, illustré schématiquement à la figure 1 et qui comprend, entre une sortie d'huile sale du laminoir et une entrée d'huile propre, selon le sens normal d'écoulement de l'huile :
- un réservoir d'huile sale 2',
- un système de pompes 110' (alimentation du système de la filtration),
- un système de filtration 100' comprenant les dispositifs de filtration et pompes,
- un système de pompe 120' (extraction du système de filtration),
- un réservoir d'huile propre 3',
- un système de pompes 4' (pour le laminoir M'),
- un système d'échangeurs 5',
- un système de valves 6'.
Dans un tel circuit, l'huile sale est collectée dans le réservoir d'huile sale 2', avant d'être acheminée, poussée par le système de pompes 110' dans le système de filtration 100, la filtration au travers du média filtrant de cartouche s'opérant sous l'aspiration des pompes 120' en aval.

L'huile filtrée est ensuite stockée dans le réservoir d'huile propre 3'. Le système de pompe 4' et de valve 6' permet ensuite d'alimenter le laminoir M' selon le débit nominal souhaité au laminoir. Le système d'échangeur 5', notamment du type eau/huile permet de régler la température de l'huile. L'installation illustrée est dimensionnée pour assurer un débit de fluide au laminoir constant, typiquement compris entre 4000 I/min et 27000 I/min, le système de filtration 100' comprenant, une pluralité de dispositifs de filtration à plateaux 100' (au nombre de quatre sur la figure 1), du type du fabriquant SUPAMIC, et connu depuis les années 1970, dans ce type d'installation de recyclage.

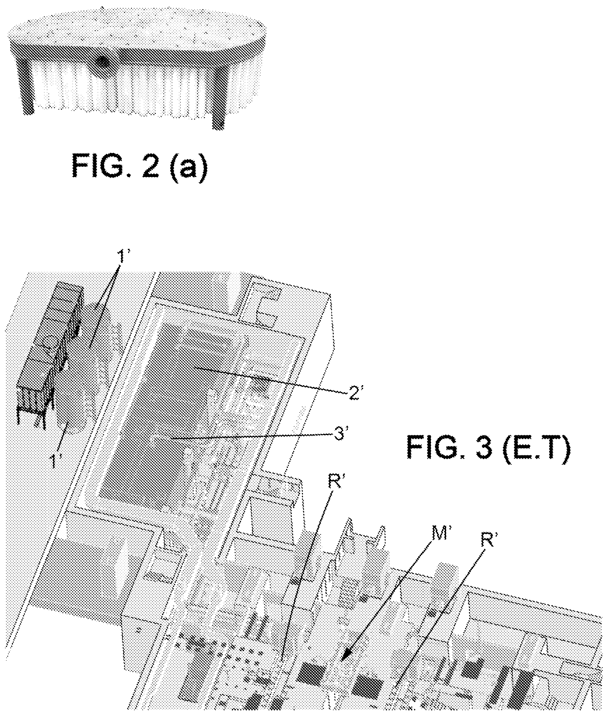

Un tel dispositif de filtration 1' comprend, tel qu'illustré à la figure 2, une cuve 10', typiquement cylindrique à l'intérieur de laquelle sont superposés plusieurs « plateaux », amovibles, repérés 11', 12', 13', 14' et 15', répartis sur la hauteur de la cuve, et empilés les uns sur les autres grâce à des systèmes de pieds. Chacun des plateaux est un élément creux sur lequel sont fixées un grand nombre de cartouches de filtration, en parallèle, typiquement par vissage de l'extrémité supérieure de la cartouche sur des parties filetées correspondant du plateau.

La cuve 10' comprend une ouverture pour l'huile sale 16', inférieure et une ouverture de trop plein 17', située au-dessus des plateaux. La filtration est réalisée au travers du média filtrant des différentes cartouches, de l'extérieur vers l'intérieur, l'huile filtrée par les cartouches étant collectée dans chacun des plateaux, qui sont des éléments creux, puis conduite vers une sortie du plateau pour l'huile propre. Les sorties d'huile des différents plateaux sont respectivement connectées, de manière étanche, à des ouvertures réparties sur la hauteur de la cuve, grâce à des jeux de brides. Les différences sorties 18' d'huile filtrée se rejoignent dans un même conduit vertical 19'.

La figure 2 illustre un tel dispositif de filtration à cinq plateaux présentant les caractéristiques suivantes :

| | |
|---|---|
| - Nombre plateaux : | 5 |
| - Longueur cartouches : | 13 pouces (soit 33,02 cm), |
| - Nombre de cartouches : | 4160 (832 cartouches par plateau), |
| - Hauteur cuve dispositif : | 6.1 mètres, |
| - Volume utile (huile) : | 18 m3, |
| - Durée de décolmatage : | 30 min. |

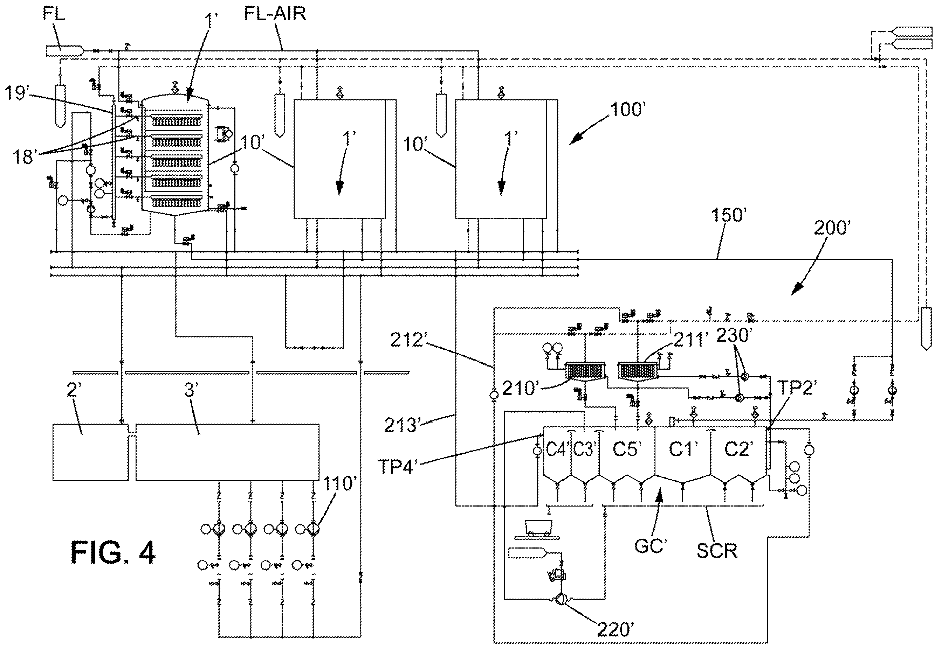

Un tel dispositif de filtration présente une capacité de filtration supérieure à 4000 l/min. Le système de filtration d'une installation de recyclage et de filtration équipant un laminoir dont le débit d'huile est de 12 000 I/min nécessite seulement trois dispositifs 1' selon la figure 4, agencés en parallèle et tel qu'illustré à la figure 3.

Pour des installations de filtration et de recyclage destinées à couvrir des besoins en huile important, typiquement de 4000l/min à 27000l/ min, il est d'usage pour l'homme du métier d'utiliser des dispositifs de filtration présentant un nombre de plateaux superposés compris entre quatre ou cinq, ce qui permet de limiter le nombre de pompes 120' qui sont associés à chacun des dispositifs filtration à quatre ou cinq plateaux.

Les cartouches de filtration utilisées comprennent bien souvent un média filtrant à base de nylon ou de fibres de verre. Afin de prolonger la durée de vie des cartouches, on utilise des cartouches de filtration nettoyable par contre-courant (en anglais « back flushable-type filter »).

Le décolmatage des cartouches est réalisé à intervalle de temps régulier, et est mis en œuvre, sur les dispositifs de filtration à plateaux, un par un. A cet effet, on met en œuvre un contre-courant de fluide (air comprimé) sur l'un des dispositifs de filtration à plateaux, et alors que les autres dispositifs de filtration à plateaux, disposés en parallèle, assurent la filtration de l'huile de laminage. Pour chaque dispositif, le décolmatage est mis en œuvre plateau par plateau, et non simultanément sur l'ensemble des cartouches des différents plateaux.

Préalablement au contre-courant d'air comprimé FL-AIR, la cuve du filtre est vidée de l'huile sale. Ensuite, l'opération de décolmatage produit de l'huile chargée en particules décollée du média filtrant des cartouches, ci-après désignée boues, qui est évacuée jusqu'à un équipement de filtration secondaire qui est décrit par la suite. Lorsque les boues décollées d'un plateau supérieur se déversent sur un plateau inférieur, de l'huile peut être prélevée d'un réservoir pour drainer les boues en dehors de la cuve du dispositif de filtration

Lors des opérations de décolmatage sur l'un des dispositifs de filtration en parallèles, les opérations de filtration et de recyclage se poursuivent sur les autres dispositifs de filtration en parallèle. Le débit de filtration du système de filtration est toutefois diminué des capacités de filtration d'un dispositif de filtration 1 ' et ne permet plus de couvrir les besoins en termes de débit d'huile filtre du laminoir.

Aussi, et pendant toute le durée décolmatage :
- le débit huile sale arrivant dans le réservoir d'huile sale 2' est supérieur au débit d'huile filtrée de sorte que le niveau d'huile sale dans ce réservoir augmente,
- à l'inverse, le débit d'huile propre aspiré par les pompes 4' depuis le réservoir d'huile propre 3' pour couvrir le besoin en huile au laminoir est supérieur au débit d'huile filtrée en parallèle par les autres dispositifs de filtration arrivant au réservoir 3' de sorte que le niveau d'huile du réservoir d'huile propre 3' diminue.

Le réservoir d'huile sale et le réservoir d'huile propre sont alors des tampons qui sont utilisés pour compenser les variations de débits de filtration lors des opérations de décolmatage et afin d'éviter d'avoir à interrompre les opérations de laminage.

Pour un dispositif de filtration à cinq plateaux, et pour lequel le décolmatage par contre-courant s'opère plateau par plateau, la durée de décolmatage est importante typiquement de l'ordre de 30 minutes de sorte que les réservoirs d'huile sale et le réservoir d'huile sale sont dimensionnés de taille très conséquente, typiquement supérieur à 100 m³ chacun pour un laminoir de débit 12000 I/min.

Le document CN103191600A décrivant une installation de filtration et de recyclage équivalente à celle présentement décrite à titre d'exemple donne ainsi à un volume utile de 130 m³ pour le réservoir d'huile sale et de 130 m³ pour le réservoir d'huile propre.

Cela oblige de placer le réservoir d'huile sale 2' et le d'huile propre 3' de large contenance, dans une cave ventilée dédiée, à distance, de la cage du laminoir, puisque l'espace devant la cage du laminoir, à proximité immédiate du laminoir, situé entre les rails des deux dispositifs porte-bobine disposés de part et d'autre de la cage de laminoir est largement insuffisant pour recevoir des réservoirs d'une telle contenance.

Le décolmatage de chaque dispositif de filtration de la filtration primaire est prévu à intervalles réguliers, toutes les huit heures, en gardant un intervalle de 2-3 heures entre les décolmatages de deux dispositifs de filtration le temps que le niveau d'huile remonte dans le réservoir d'huile propre, et diminue dans le réservoir d'huile sale.

En période de fonctionnement normale lorsque tous les dispositifs de filtration en parallèle assurent la filtration de l'huile, le débit de filtration de l'ensemble des dispositifs de filtration en parallèle redevient supérieur au débit nominal au laminoir de sorte à permettre au niveau d'huile propre de remonter dans le réservoir d'huile propre, et au niveau d'huile sale de descendre dans le réservoir d'huile sale. Le réservoir d'huile propre comprend alors une surverse de trop plein qui permet au surplus d'huile filtrée de déborder du réservoir d'huile propre et de se déverser jusqu'au réservoir d'huile sale.

Afin d'éviter les interruptions des opérations de laminage par défaut de niveau d'huile dans le réservoir d'huile propre, le document CN103191600A enseigne d'équiper le réservoir d'huile propre d'un capteur de niveau haut, et de ne commencer les opérations de décolmatage de la filtration primaire que lorsque le capteur de niveau haut indique que le réservoir d'huile propre est plein.

Les installations de filtration et de recyclage selon l'état de la technique comprennent une filtration secondaire avec un système de filtration secondaire 200' qui permet de traiter les boues issues du décolmatage du média filtration des cartouches du système de filtration100' de la filtration primaire.

Ainsi la figure 4 illustre le schématiquement l'installation de filtration et de recyclage selon l'état de la technique, y compris le réservoir d'huile sale et le réservoir d'huile propre, les trois dispositifs de filtration 1 (chacun à cinq plateaux superposés) de la filtration primaire qui assurent la filtration de l'huile prélevée du réservoir d'huile sale 3' par un ensemble de pompe du système de pompe 110' poussant l'huile jusqu'au trois cuves 10', l'huile traversant le média filtrant des cinq plateaux avant d'être collectée dans le conduite au sein du plateau et de sortir par le sortie 18', puis d'être collectée dans le conduite verticale, la pompe d'extraction 120' associé à chaque dispositif de filtration 1 ' permettant d'aspirer l'huile qui est retournée jusqu'au réservoir d'huile propre.

Les opérations de décolmatage s'opèrent dispositif de filtration par dispositif de filtration par injection d'air comprimé dans les plateaux de filtration, plateau par plateau. Préalablement aux opérations d'injection d'air à contre-courant au travers le média filtrant des cartouches, on vide la cuve du dispositif de filtration dans le réservoir d'huile sale, puis on procède aux injections d'air à contrecourant au travers des cartouches afin d'assurer le décollement des boues du média filtrant.

Les boues décollées des cartouches par l'air à contre-courant sont récupérées en fond de cuve puis acheminées dans un système de filtration secondaire en vue de leur traitement.

Ces boues arrivent via la conduite 150' dans un groupe de décantation GC' comprenant plusieurs cuves de décantation séparées par des cloisons. D'une manière générale, le groupe de décantation GC' comprend plusieurs cuves séparées par des cloisons, et de sorte à atténuer les turbulences générées par les brusques arrivées de boues, environ toutes les deux-trois heures. Le groupe de décantation GC' comprend une première cuve de décantation C1', prévue débordante par une surverse dans une deuxième cuve de décantation C2'. Les particules les plus grossières précipitent en fond des cuves C1' et C2'.

Les particules grossières sont prélevées dans une trémie en fond par une vis sans fin SCR, puis acheminées par une pompe 220 ' jusqu'à une troisième cuve C3' et une quatrième cuve C'4 pour des boues concentrées, les boues concentrées en particules étant constamment soutirées pour être évacuées.

L'équipement de filtration secondaire comprend outre des cuves de décantation, et en particulier la première cuve C1' et la deuxième cuve C2', au moins un, voire plusieurs dispositifs de filtration 210', 211', et notamment deux dispositifs de filtration 210', 211' à la figure 4.

Des pompes 203' permettent de prélever l'huile à mi-hauteur des cuves C1' C2' et de l'acheminer dans la cuve des dispositifs de filtration 210', 211', en vue d'être filtrée au travers des du média filtre des cartouches de dispositifs de filtration 210', 211 ', l'huile filtrée étant acheminée par les conduites 212', 213' pour être retournée vers le réservoir d'huile sale 3'.

Des surverses de trop plein TP2' et TP4' sont prévues au niveau de la deuxième cuve C2' et de la quatrième cuve C4 ' et permettent d'évacuer le trop plein directement vers le réservoir d'huile sale 3', mais alors sans passage de l'huile par le/les dispositif de filtration 210', 211'.

Les cartouches des dispositifs de filtration 210',211' secondaire nécessitent, périodiquement, elles-mêmes, un décolmatage par contre-courant d'air comprimé. Lors du décolmatage des cartouches du filtre secondaire, les boues sont acheminées dans une cinquième cuve C5' qui déborde dans la troisième cuve C3'. Le décantât de la cinquième cuve est prélevé par la vis sans fin SCR' et acheminé par la pompe 220 jusqu'à la troisième cuve C3'.

Le document CN103191600A fait la critique au paragraphe [13] d'un tel système de filtration secondaire, et plus particulièrement la critique selon laquelle lorsque le niveau d'huile devient trop haut dans les cuves de décantation, l'huile s'écoule directement (par les surverses de trop plein repérées TP2', TP4' à la figure 4) jusqu'au réservoir d'huile sale, et donc sans passer par les dispositifs de filtration secondaire repérée 210', 211', ce débordement fortement contaminé en particules métalliques venant contaminer à son tour l'huile sale dans le réservoir d'huile sale, par effet domino, puis colmater les cartouches de la filtration primaire, provoquant leur colmatage prématuré, avec une chute du débit de filtration à l'origine d'un défaut sévère de l'installation de filtration et de recyclage.

La figure 3 du document CN103191600A illustre un tel système de filtration secondaire. Les boues provenant du décolmatage des filtres de la filtration primaire arrivent jusqu'à une cuve de transfert, comprenant une grille, les boues débordant d'une surverse étant acheminées jusqu'à une première cuve d'un groupe de décantation à trois cuves de décantation, l'huile débordant de la première cuve vers la deuxième cuve, puis de la deuxième jusqu'à la troisième. Les particules grossières précipitant en fond de cuve sont soutirées pour être acheminées jusqu'à deux cuves pour des boues concentrées.

Une pompe (à droite) permet de prélever de l'huile à mi-hauteur dans la deuxième et la troisième cuve de décantation, jusqu'à un dispositif de filtration secondaire à cartouches. L'huile filtrée par les cartouches du dispositif de filtration secondaire est acheminée jusqu'au réservoir d'huile sale.

Afin de s'assurer que toute l'huile ayant transité dans les trois cuves de décantation du groupe soit bien filtrée par le dispositif de filtration, avant d'être acheminée au réservoir d'huile sale, autrement dit d'éviter que celle huile fortement contaminée en particules déborde dans la surverse de trop plein et soit remenée jusqu'au réservoir d'huile sale en le contaminant, le document CN103191600A enseigne de procéder au décolmatage par contrecourant de la filtration primaire lorsque le niveau d'huile de le deuxième cuve de décantation (ou la troisième cuve) de décantation est à mi-hauteur, et d'équiper la deuxième cuve (ou la troisième cuve) d'un capteur de niveau à cet effet.

On s'assure ainsi que la cuve de décantation est à moitié pleine, à savoir avec un vide supérieur à la quantité de boue qui arrive rapidement à l'issue du décolmatage des cartouches de la filtration primaire, la cuve permettant ainsi de contenir cette arrivée sans débordement par les trop pleins, et le temps que l'huile soit filtrée par les cartouches de filtration de la filtration secondaire.

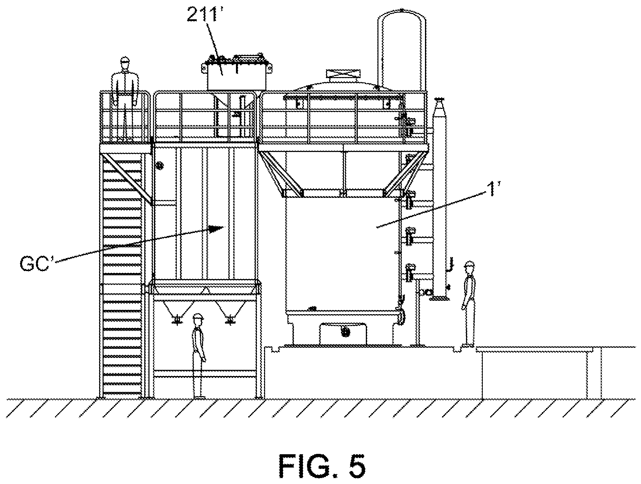

S'agissant de l'agencement et dispositifs de filtration de la filtration primaire, et des cuves de décantation et des dispositifs de filtration du système de filtration secondaire, les dispositifs de filtration selon l'état de la technique sont classiquement de forme cylindrique et sont placés sur une première rangée, les uns à côtés des autres, alors que l'équipement de filtration secondaire est disposé selon une seconde rangée parallèle, et comme illustré à la figure 5. Le système de filtration secondaire comprend les cuves de décantation, les unes à côtés des autres, les deux dispositifs de filtration secondaire, positionnés au-dessus des cuves de décantation.

Selon les constations de l'inventeur, une telle installation de recyclage et de filtration telle connue de 'l'état de la technique et illustrée aux figures 1 à 5, (ou encore enseignée par CN103191600A) présente les inconvénients suivants au niveau de la filtration primaire:
1) des volumes pour le réservoir d'huile sale et d'huile propre important de l'ordre de 130m³ selon CN103191600A,
2) une difficulté à évacuer de la cuve les boues décolmatées des plateaux supérieurs, qui recouvrent les plateaux inférieurs lors du décolmatage de la filtration primaire,
3) le décolmatage des filtres des dispositifs de la filtration primaire, engendre un volumes de boue de l'ordre de 2m³ qui s'écoule soudainement dans les cuves de décantation de la filtration secondaire et sont à l'origine de turbulences qui perturbent la séparation par décantation.

On connait toutefois du document WO2016/066926 de la présente Demanderesse une installation de recyclage et de filtration pour laminoir 20 cylindres, modifiant fondamentalement le dimensionnement des dispositifs de filtration de la filtration primaire, en vue de réduire le temps de décolmatage de la filtration primaire, et permettant ainsi une diminution la taille des réservoirs en particulier d'huile sale, et décrivant un nouvel agencement du réservoir d'huile sale, à proximité du laminoir, permis par cette réduction de volume, et non à distance tel que divulguée à la figure 3 de la présente demande.

Encore, et selon les constatations de l'inventeur, une telle installation de recyclage et de filtration telle connue de 'l'état de la technique et illustrée aux figures 1 à 5, (ou encore enseignée par CN103191600A) présente encore les inconvénients suivant, au niveau de la filtration secondaire :
1) une mauvaise sédimentation des particules métalliques dans les cuves de décantation, en raison des turbulences créées dans ces cuves (en particulier repérées C1' et C2' à la figure 4) par les brusques arrivées des boues de la filtration primaire à chaque décolmatage (environ toutes les 2-3 heures), ou encore en raison des boues provenant du décolmatage des cartouches de la filtration secondaire, qui sont à l'origine de turbulences dans la cuve de décantation C5', puis dans les cuves C3' et C4' par débordement
2) une durée de vie courte (inférieure à 1 an) des cartouches de filtration de la filtration secondaire des dispositifs repérés 210' et 211'.
3) comme compréhensible de CN103191600.A, en cas d'erreur de l'opérateur un risque important de pollution de l'huile du réservoir d'huile sale avec les huiles fortement chargées en particules débordant du trop-plein TP2', TP4', des cuves de décantation de la filtration secondaire, qui s'écoule directement jusqu'au réservoir d'huile sale puis dans la filtration primaire, et sans filtration par les cartouches de la filtration secondaire. Les documents DE229 11 482 et CN 101368662 présentent des exemples supplémentaires de traitement des boues résultant du nettoyage de la filtration. Le catalogue Hydac publié le 21 novembre 2013 et intitulé « *Back-flushable filter cartridges for rolling oil filtration in stainless steel cold rolling mills* » présente un autre exemple de décolmatage de filtres fonctionnant en continu.

### Résumé

La présente divulgation vient améliorer la situation.

Selon un **premier aspect,** il est proposé un procédé de recyclage et de filtration d'huile de laminage mis en œuvre pour un laminoir nécessitant un débit nominal d'huile de laminage compris entre 4000 l/min et 30000 l/min dans une installation de recyclage et de filtration d'huile présentant un circuit comprenant, successivement, selon le sens d'écoulement de l'huile :
- un réservoir d'huile sale, collectant les huiles de laminage provenant du laminoir
- un système de filtration comprenant plusieurs dispositifs de filtration d'huile configurés pour réaliser une filtration de l'huile en parallèle, chaque dispositif de filtration présente une cuve recevant un ensemble de cartouches de filtration, la cuve comprenant une entrée pour de l'huile à filtrer et au moins une sortie pour l'huile filtrée ayant traversé un média filtrant des cartouches,
- un réservoir d'huile propre à partir duquel le laminoir est alimentée en huile de laminage au débit nominal,

et procédé dans lequel on récupère les huiles sales de laminage chargées en particules dans le réservoir d'huile sale et on assure une filtration primaire de l'huile du réservoir d'huile sale en faisant circuler l'huile en parallèle dans les dispositifs de filtration, et on collecte l'huile filtrée dans le réservoir d'huile propre,
et dans lequel on utilise des cartouches de filtration nettoyables par contre-courant, et on procède à un décolmatage des cartouches, d'un dispositif de filtration en mettant en œuvre un contre-courant de fluide, sur ce dispositif de filtration, alors que les autres dispositifs de filtration, disposés en parallèle, assurent la filtration de l'huile de laminage, l'opération de décolmatage générant des boues constituées par l'huile fortement chargée en particules métalliques
et procédé dans lequel on achemine les boues générées par l'opération de décolmatage dans un système de séparation secondaire, assurant une séparation par décantation de l'huile et des particules contenues dans les boues, obtenant une boue concentrée en particules qui est évacuée, et une huile déchargée en particules est renvoyée au réservoir d'huile sale.

De manière notable et selon la présente divulgation, le système de séparation secondaire par décantation comprend :
- un réservoir tampon configuré pour collecter les boues générées par l'opération de décolmatage des cartouches de la filtration primaire,
- un décanteur configuré pour assurer la sédimentation des particules contenues dans les boues dans un fond du décanteur, présentant une entrée d'alimentation des boues et une sortie pour les huiles décantées,
- un dispositif motorisé de régulation comprenant au moins une pompe configuré pour alimenter selon un débit contrôlé l'entrée d'alimentation du décanteur à partir des boues du réservoir tampon
et dans lequel on sépare les boues dans le décanteur en des particules qui sédimentent dans le fond du décanteur et en une huile déchargée des particules qui s'évacue par la sortie en assurant un débit contrôlé par ladite au moins une pompe des boues alimentant le décanteur de sorte à garantir une décantation continue et sans turbulence dans le décanteur entre ladite entrée d'alimentation et ladite sortie du décanteur, sur une durée supérieure à la durée séparant deux opérations de décolmatage consécutives de deux dispositifs de filtration de la filtration primaire.

Les caractéristiques exposées dans les paragraphes suivants peuvent, optionnellement, être mises en œuvre. Elles peuvent être mises en œuvre indépendamment les unes des autres ou en combinaison les unes avec les autres :
- ledit décanteur présente un volume utile entre ladite entrée d'alimentation et la sortie, de contenance V, et dans lequel on régule le débit d'alimentation D, de sorte que le temps de décantation moyen égale au rapport de V/D est supérieure à 10 heures, par exemple compris entre 30 heures et 100 heures, tel que 60 heures entre ladite entrée et la sortie ;
- le décanteur comprend une unique cuve de décantation s'étendant en longueur suivant une direction longitudinale et dans lequel ladite entrée d'alimentation pour les boues est prévue à l'une dite proximale des extrémités longitudinales de la cuve de décantation, et la sortie à l'autre dite distale des extrémités longitudinales ;
- la cuve de décantation est une cuve sans cloison transversale à la direction longitudinale entre l'entrée pour les boues et la sortie pour l'huile décantée ;
- la cuve présente une section en V, selon un plan perpendiculaire à la direction longitudinale, avec deux parois inclinées l'une vers l'autre convergentes vers le fond de la cuve ;
- un convoyeur motorisé, immergé, est disposé au fond de la cuve de décantation et s'étend suivant la direction longitudinale comportant des racleurs configurés pour racler le fond de la cuve de décantation et ramener les sédiments au niveau d'une extrémité où les sédiments sont soutirés, en particulier au niveau de l'extrémité proximale.
- la sortie d'alimentation est une surverse définissant le volume de fluide dans la cuve de décantation ;
- les dispositifs de filtration comprennent chacun un ou plusieurs plateaux dans le volume interne de la cuve, amovibles, configurés à être retirés hors de la cuve par une ouverture supérieure fermée par un ou plusieurs couvercles, chacun des plateaux recevant de manière amovible des cartouches de filtration, chacun des plateaux, creux constituant un collecteur pour l'huile filtrée par les cartouches dudit plateau, chacun des plateaux comprenant une sortie d'huile filtrée connectée de manière amovible à une sortie correspondante de la cuve par l'intermédiaire d'un raccord ;
- l'installation présente un unique plateau ou encore plusieurs plateaux qui sont alors disposés juxtaposés sur un unique niveau dans la cuve, les cartouches suspendues vers le bas, et de sorte que les boues générées par le contrecourant de fluide chutent directement dans le fond de la cuve du dispositif de filtration
- le système de séparation secondaire assurant la séparation des boues en la boue concentrée et en huile déchargée des particules métalliques est dépourvu d'un dispositif de filtration à cartouches de sorte que la séparation secondaire est obtenue par décantation uniquement ;
- lors du décolmatage d'un des dispositifs de filtration, les autres dispositifs de filtration à plateau(x), disposés en parallèle, assurent la filtration de l'huile de laminage selon un débit de filtration couvrant le débit nominal du laminoir pour les opérations de laminage, le débit d'huile filtrée arrivant au réservoir d'huile sale étant toujours surcapacitaire par rapport au débit nominal qui est prélevé du réservoir d'huile propre pour refroidir le laminoir, même lorsque le débit de filtration est diminué d'un dispositif de filtration lors de son décolmatage par contre-courant.

Selon un **deuxième aspect,** la présente divulgation est relative à une installation de recyclage et de filtration d'huile de laminage présentant un circuit comprenant, successivement, selon le sens d'écoulement de l'huile :
- un réservoir d'huile sale, collectant les huiles de laminage provenant d'un laminoir
- un système de filtration comprenant plusieurs dispositifs de filtration d'huile configurés pour réaliser une filtration de l'huile en parallèle, chaque dispositif de filtration présente une cuve recevant un ensemble de cartouches de filtration, la cuve comprenant une entrée pour de l'huile à filtrer et au moins une sortie pour l'huile filtrée ayant traversé un média filtrant des cartouches, les cartouches de filtration étant nettoyables par contre-courant
- un réservoir d'huile propre,
- un système de décolmatage des cartouches des dispositifs de filtration configuré pour mettre en œuvre un contre-courant de fluide, sur l'un des dispositifs de filtration, et alors que les autres dispositifs de filtration, disposés en parallèle, assurent la filtration de l'huile de laminage, l'opération de décolmatage générant des boues constituées par l'huile fortement chargée en particules métalliques
- un système de séparation secondaire, assurant une séparation par décantation de l'huile et des particules contenues dans les boues obtenant une boue concentrée en particules qui est évacuée, et une huile déchargée en particule qui est envoyée au réservoir d'huile sale.

De manière notable et selon la présente divulgation, le système de séparation secondaire par décantation comprend :
- un réservoir tampon dimensionné pour collecter les boues générées par l'opération de décolmatage des cartouches de la filtration primaire,
- un décanteur configuré pour assurer la sédimentation des particules contenues dans les boues dans le fond du décanteur, présentant une entrée d'alimentation des boues alimentées et une sortie pour les huiles décantées,
- un dispositif motorisé de régulation comprenant au moins une pompe configuré pour alimenter selon un débit contrôlé ladite entrée d'alimentation du décanteur à partir des boues du réservoir tampon ,
et dans lequel le système de séparation secondaire est configuré pour séparer les boues dans le décanteur en des particules qui sédimentent dans le fond du décanteur et en une huile déchargée des particules en assurant un débit contrôlé par ladite au moins une pompe des boues alimentant le décanteur de sorte à garantir une décantation continue et sans turbulence dans le décanteur sur une durée supérieure à la durée séparant deux opérations de décolmatage consécutives de deux dispositifs de filtration de la filtration primaire.

Les caractéristiques exposées dans les paragraphes suivants peuvent, optionnellement, être mises en œuvre. Elles peuvent être mises en œuvre indépendamment les unes des autres ou en combinaison les unes avec les autres :
- le décanteur comprend une unique cuve de décantation s'étendant en longueur suivant une direction longitudinale et dans lequel ladite entrée d'alimentation pour les boues est prévue à l'une dite proximale des extrémités longitudinales de la cuve de décantation, la sortie à l'autre dite distale des extrémités longitudinales ;
- la cuve de décantation est une cuve dépourvue de cloison transversale à la direction longitudinale entre l'entrée pour les boues et la sortie pour l'huile décantée ;
- la cuve présente une section en V, selon un plan perpendiculaire à la direction longitudinale, avec deux parois inclinées l'une vers l'autre convergentes vers le fond de la cuve de décantation ;
- un convoyeur motorisé, immergé, est disposé au fond de la cuve de décantation et s'étend suivant la direction longitudinale comportant des racleurs configurés pour racler le fond et ramener les sédiments au niveau d'une extrémité où les sédiments sont soutirés, en particulier de l'extrémité proximale ;
- la sortie est une surverse définissant le volume de fluide dans la cuve de décantation du décanteur ;
- les dispositifs de filtration comprennent chacun un ou plusieurs plateaux dans le volume interne de la cuve, amovibles, configurés à être retirés hors de la cuve par une ouverture supérieure fermée par un couvercle, chacun des plateaux recevant de manière amovible des cartouches de filtration, chacun des plateaux, creux constituant un collecteur pour l'huile filtrée par les cartouches dudit plateau, chacun des plateaux comprenant une sortie d'huile filtrée connectée de manière amovible à une sortie correspondante de la cuve par l'intermédiaire d'un raccord ;
- l'installation présente un unique plateau ou plusieurs plateaux qui sont alors disposés juxtaposés sur un unique niveau dans la cuve, les cartouches suspendues vers le bas, et de sorte que les boues générées par le contrecourant de fluide chutent directement dans le fond de la cuve du dispositif de filtration;
- les cuves des dispositifs de filtration assurant la filtration primaire, voire le réservoir tampon sont agencés au-dessus du décanteur assurant la séparation secondaire ;
- les cuves des dispositifs de filtration, voire le réservoir tampon, sont juxtaposés en série au-dessus de la cuve de décantation du décanteur en série le long de la direction longitudinale de la cuve de décantation ;
- l'installation présentant plusieurs plateaux juxtaposés sur un unique niveau dans la cuve et dans lequel les plateaux juxtaposés sont décalés suivant la direction transversale à la cuve de décantation ;
- les cuves des dispositifs de filtration juxtaposés sont de sections rectangulaires, selon un plan horizontal, et s'étendent en longueur selon la direction transversale à la cuve de décantation du décanteur et en largeur suivant la direction longitudinale de la cuve de décantation du décanteur ;
- la cuve de décantation du décanteur comprend, suivant la direction longitudinale de la cuve, plusieurs segments de cuve soudés les uns aux autres, et selon un pas , suivant la direction longitudinale de la cuve de décantation, correspondant à la dimension d'un dispositif de filtration, suivant la direction longitudinale, voire à la dimension du réservoir tampon suivant la direction longitudinale, les segments formant la cuve de décantation de la séparation secondaire, d'une part, et les dispositifs de filtration voire le réservoir tampon , superposés aux segments étant respectivement positionnés, en recouvrement les uns par rapport aux autres suivant la direction longitudinale ;
- les cuves des dispositifs de filtration, voire également le réservoir tampon sont contenus dans l'empreinte de la cuve de décantation du décanteur ;
- le réservoir d'huile sale est positionné dans une cave à proximité immédiate du laminoir, donnant accès au-dessous de la cage du laminoir et alors que les dispositifs de filtration du système de filtration primaire, d'une part, et le décanteur et le réservoir tampon du système de séparation secondaire, d'autre part, sont situés à un niveau supérieur.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] est une vue schématique d'une installation de filtration et de recyclage d'huile d'un laminoir 20 cylindres, telle que connue de l'état de la technique.
**Fig. 2**
   [Fig. 2] est une vue d'un dispositif de filtration à cinq plateaux, tel que connu de l'état de la technique.
**Fig. 2a**
   [Fig. 2a] est une vue d'un dispositif de filtration à cinq plateaux, tel que connu de l'état de la technique.
**Fig. 3**
   [Fig. 3] La figure 3 est une vue de l'agencement au sol des équipements d'une installation de recyclage selon l'état de la technique.
**Fig. 4**
   [Fig. 4] est une vue schématique de la filtration d'une installation de filtration et recyclage selon l'état de la technique illustrant le schéma de la filtration primaire comprenant trois dispositifs de filtration en parallèle (à cinq plateaux), assurant la filtration de l'huile sale provenant du réservoir d'huile sale, l'huile filtrée étant acheminée jusqu'à un réservoir d'huile propre, le réservoir d'huile propre présentant une surverse de trop plein en communication avec le réservoir d'huile sale, et en bas à droite, le schéma de la filtration secondaire telle que connue de l'état de la technique, la filtration secondaire assurant le traitement des huiles chargées en particules décollées des cartouches lors de la mise en œuvre du contrecourant par air comprimé, ci-après désignées les boues, le filtration secondaire comprenant un ensemble de cuves de décantation séparées par des cloisons, ainsi que deux dispositifs de filtration comprenant chacun une cuve et un plateau pourvu de cartouches de filtration.
**Fig. 5**
   [Fig. 5] est une vue de côté de l'agencement des cuves de la filtration primaire disposé suivant une première rangée, et la filtration secondaire disposée selon une seconde rangée, et selon l'agencement connu de l'état de la technique.
**Fig. 6**

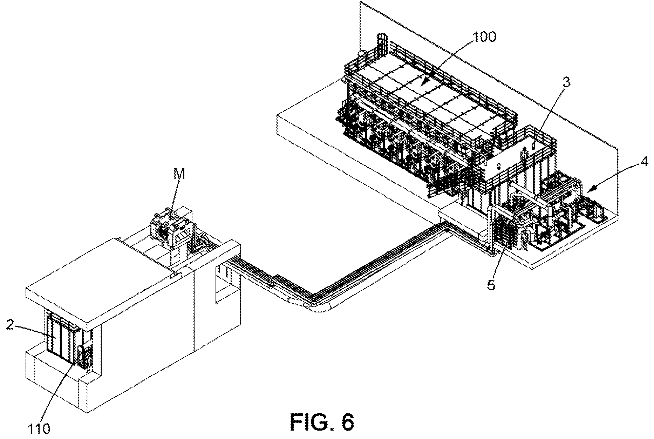

   [Fig. 6] est une vue globale d'un agencement possible d'une installation de filtration et de recyclage selon la présente divulgation.
**Fig. 7**

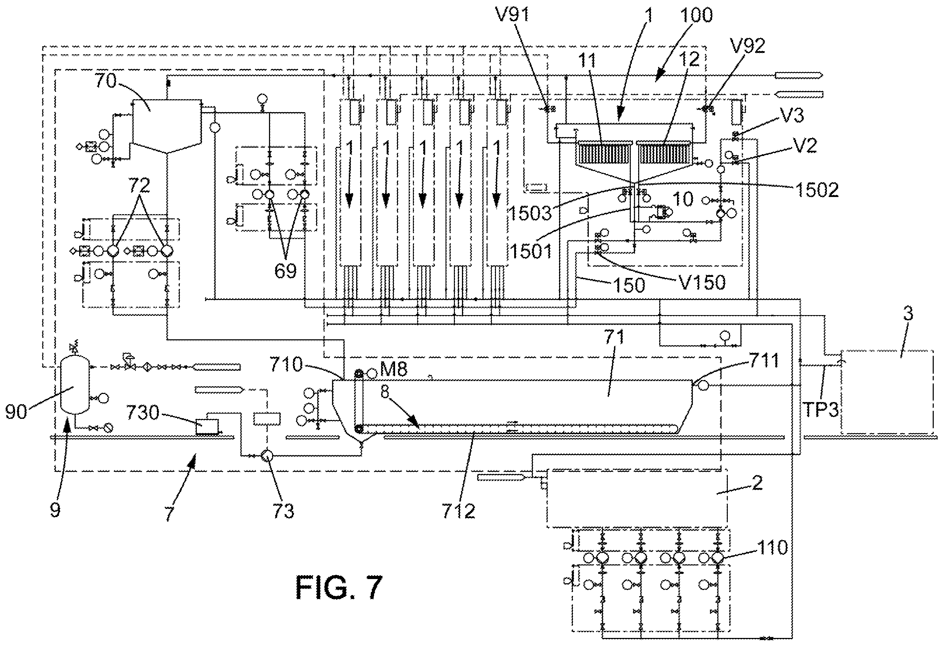

   [Fig. 7] est une vue schématique de la filtration d'une installation de filtration et recyclage selon la présente divulgation illustrant en haut, le schéma de la filtration primaire comprenant six dispositifs de filtration, assurant une filtration en parallèle, chacun à deux plateaux juxtaposés, les dispositifs assurant la filtration de l'huile sale provenant du réservoir d'huile sale, l'huile filtrée étant acheminée jusqu'à un réservoir d'huile propre, le réservoir d'huile propre présentant une surverse de trop plein en communication avec le réservoir d'huile sale, et en bas à droite, le schéma de la séparation secondaire selon la présente divulgation, la séparation secondaire assurant le traitement des huiles chargées en particules décollées lors de la mise en œuvre du contrecourant par air comprimé, ci-après désignées les boues, par décantation uniquement, par une régulation motorisée du débit de boue arrivant au décanteur à partir d'un réservoir tampon, l'entrée d'alimentation des boues étant agencée au niveau d'une extrémité proximale de la cuve de décantation, le fond de la cuve de décantation étant raclé en continu pour ramener les sédiments vers l'extrémité proximale où les sédiments sont soutirés, l'huile décantée, déchargée des particules étant évacuée, par une surverse à l'extrémité distale de la cuve de décantation, puis retournée jusqu'au réservoir d'huile sale.
**Fig. 8**

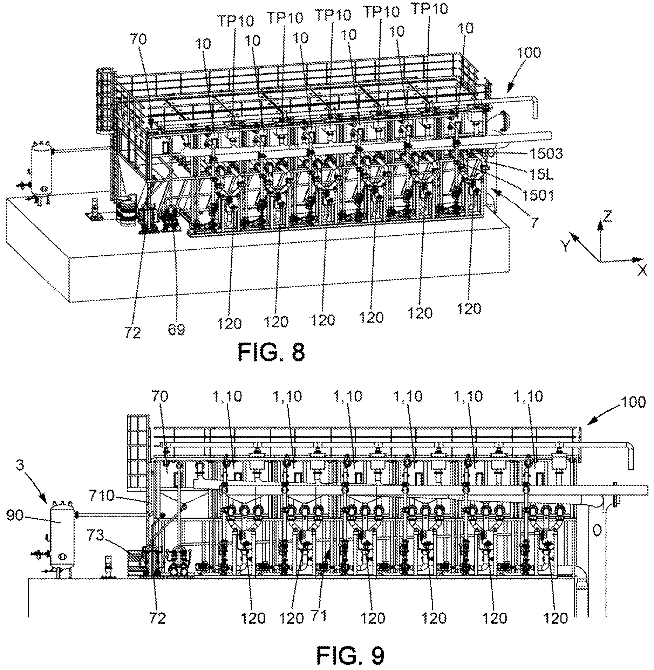

   [Fig. 8] est une vue d'un agencement comprenant la cuve de décantation qui s'étend en longueur, sur laquelle sont superposés les différents dispositifs de filtration en série, suivant la longueur de la cuve de décantation, ainsi que le réservoir tampon, et selon une empreinte (selon l'horizontale) contenue et notamment égale à la cuve de décantation.
**Fig. 9**
   [Fig. 9] est une vue de détail de la figure 8.
**Fig. 10**

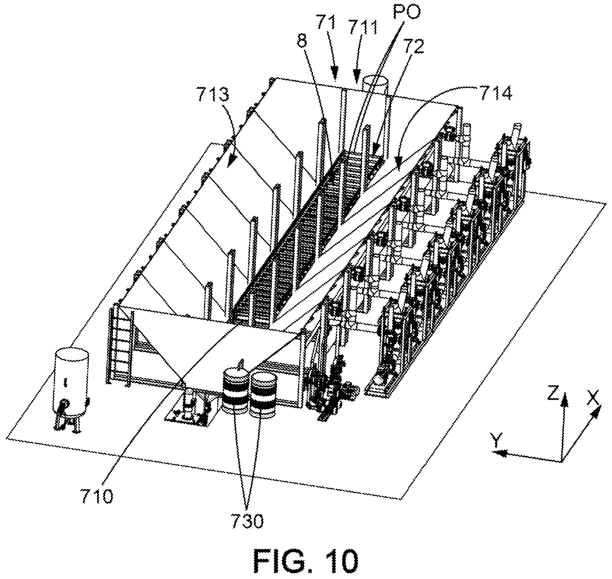

   [Fig. 10] est une vue de coupe selon un plan horizontal, illustrant la cuve de décantation du décanteur, qui est dépourvue de cloison transversale entre ladite extrémité proximale au niveau de laquelle est prévue l'entrée d'alimentation pour les boues, et l'extrémité distale au niveau de laquelle est prévue la sortie pour l'huile décantée déchargée des particules métalliques
**Fig. 11**

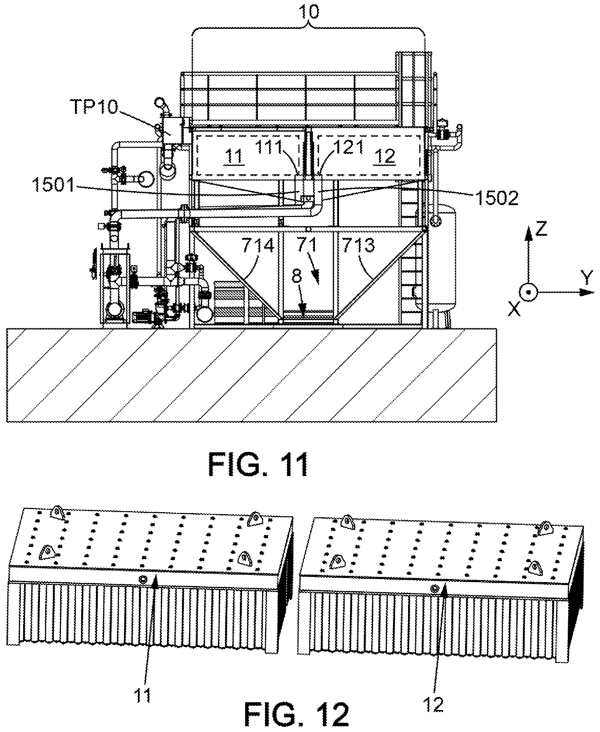

   [Fig. 11] est une de coupe selon un plan vertical, illustrant la superposition de la cuve d'un dispositif de filtration, suivant la direction transversale Y à la cuve de décantation, la cuve du dispositif de filtration, sensiblement parallélépipédique, s'étendant en longueur suivant la direction transversale Y, et suivant une empreinte égale à l'empreinte de la cuve suivant cette direction transversale Y, la cuve recevant deux plateaux collecteurs d'huile filtrée auxquelles sont suspendues de manière amovible des cartouches de filtration typiquement vissés au plateau.
**Fig. 12**
   [Fig. 12] est vue de détails des deux plateaux, sensiblement rectangulaires, auxquels sont suspendues des cartouches de filtration, fixées de manière amovible vissées aux plateaux, s'étendant en parallèles sous le plateau.
**Fig. 13**

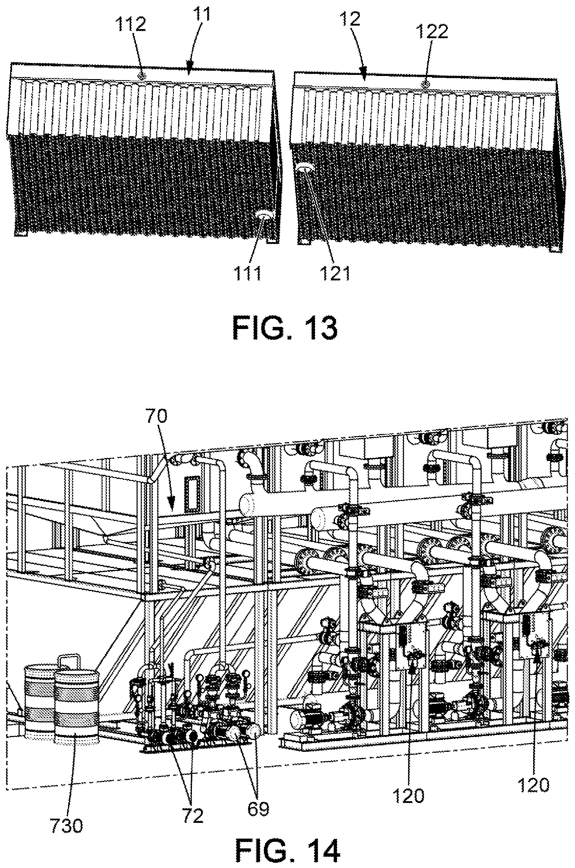

   [Fig. 13] est vue de détail de dessous des deux plateaux, sensiblement de la figure 12, illustrant pour chaque plateau collecteur d'huile filtre, une sortie sous forme d'une tubulure s'étendant depuis le plateau, à la verticale et de manière parallèle aux cartouches de filtration avec une embouchure située sous les extrémités inférieures des cartouches.
**Fig. 14**
   [Fig. 14] est vue de détail illustrant l'extrémité proximale de la cuve comportant l'entrée d'alimentation des boues, illustrant les pompes de relevage des boues jusqu'au réservoir tampon, le réservoir tampon superposé à la cuve de décantation au niveau de son extrémité proximale ; ainsi que deux pompes motorisées assurant l'alimentation de l'entrée de la cuve de décantation à partir des boues contenues dans le réservoir, et selon un débit régulé garantissant une décantation continue, sans turbulence dans la cuve de décantation.
**Fig. 15**

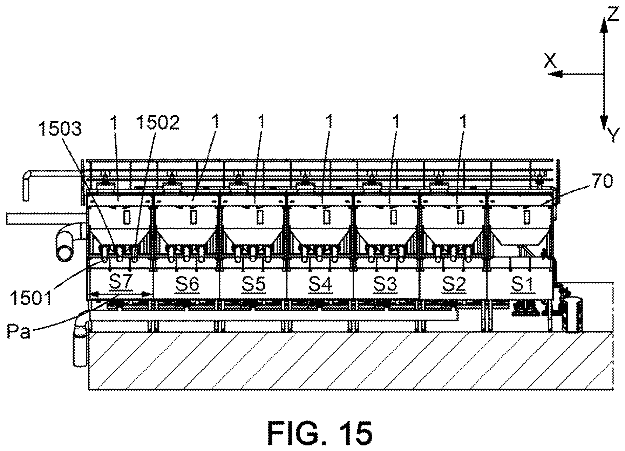

   [Fig. 15] est vue de coupe selon un plan vertical parallèle à l'axe longitudinal de la cuve de décantation, et illustrant la modularité de l'ensemble, la cuve de segmentation étant composé de segments soudés les uns à la suite des autres, présentant un pas correspondant à la dimension de chacun des dispositifs de filtration selon la direction longitudinale, ainsi qu'à la dimension du réservoir tampon, facilitant le transport et l'assemblage par conteneur maritime.
**Fig. 16**

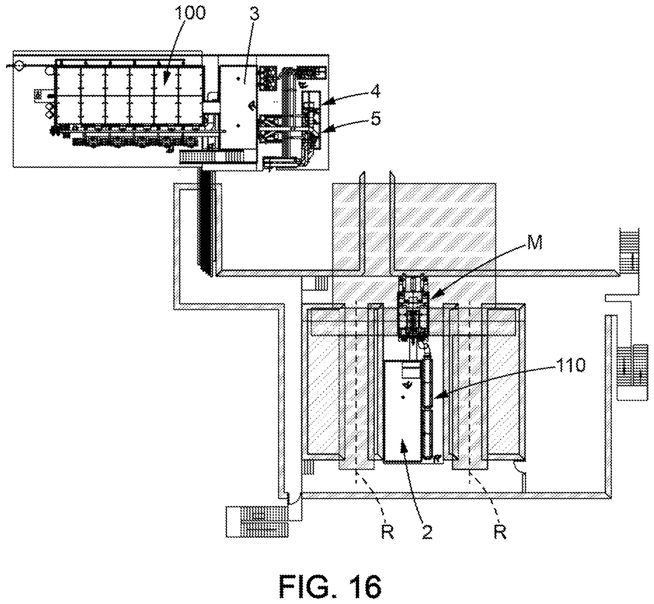

   [Fig. 16] est d'un agencement possible de l'installation de filtration et de recyclage selon la présente divulgation, avec le réservoir d'huile sale positionné dans une cave à proximité du laminoir, donnant accès en dessous de la cage du laminoir

### Description des modes de réalisation

Aussi la présente divulgation concerne selon un premier aspect un procédé de recyclage et de filtration d'huile de laminage mis en œuvre pour un laminoir M nécessitant un débit nominal d'huile de laminage compris entre 4000 I/min et 30000 l/min, et par exemple entre 8000 l/min et 27000l/min.

Le laminoir opère un laminage de la bande à froid et peut être typiquement un laminoir 20 cylindres. Deux portes-bobines sont typiquement prévus de part et d'autre de la cage du laminoir selon le sens de défilement de la bande. La bande peut être laminée entre les cylindres de travail du laminoir, dans un premier sens de défilement, une première bobine motorisée alors déroulée, la bande s'enroulant sur une deuxième bobine motorisée, puis la bande laminée peut être laminée dans un deuxième sens de défilement, lorsque la deuxième bobine est déroulée, la bande laminée s'enroulant sur la première bobine.

Les opérations de laminage à froid se déroulent sous aspersion d'huile de lubrification qui est typiquement dirigée sur la bande laminée et les cylindres de travail lors du laminage. Les opérations de laminage sont des opérations fortement génératrices de particules métalliques et les huile de laminage en sortie du laminoir sont chargées en particules métalliques. Il est donc connu de filtrer les huiles de laminage afin de les débarrasser des particules métalliques pour permettre leur recyclage au laminoir et classiquement de refroidir l'huile avant de l'utiliser de nouveau comme huile de lubrification et de refroidissement au laminoir.

A cet effet le procédé est mis en œuvre dans une installation de recyclage et de filtration d'huile présentant un circuit comprenant, successivement, selon le sens d'écoulement de l'huile :
- un réservoir d'huile sale 2, collectant les huiles de laminage provenant du laminoir M,
- un système de filtration 100 comprenant plusieurs dispositifs de filtration 1 d'huile configurés pour réaliser une filtration de l'huile en parallèle, chaque dispositif de filtration présentant une cuve 10 recevant un ensemble de cartouches de filtration, la cuve comprenant une entrée pour de l'huile à filtrer et au moins une sortie pour l'huile filtrée ayant traversé un média filtrant des cartouches,
- un réservoir d'huile propre 3 à partir duquel le laminoir est alimentée en huile de laminage au débit nominal.

Le réservoir d'huile sale 2 peut être typiquement situé à un niveau inférieur au laminoir M de sorte que l'huile de laminage chargée en particules s'écoule par gravité dans le réservoir d'huile sale.

A la figure 7, un système de pompe 110 qui comprend à titre d'exemple 4 pompes en parallèle, typiquement en sortie du réservoir d'huile sale 2 permet d'acheminer l'huile sale et est configuré pour pousser l'huile sale et la délivrer en parallèles aux différentes cuves des dispositifs de filtration.

Selon le procédé, on récupère les huiles sales de laminage chargées en particules dans le réservoir d'huile sale 2 et on assure une filtration primaire de l'huile du réservoir d'huile sale 2 en faisant circuler l'huile en parallèle dans les dispositifs de filtration 1, au travers du média des cartouches de filtration, et on collecte l'huile filtrée dans le réservoir d'huile propre 3,
La filtration dans les cuves 10 s'opère typiquement par aspiration de systèmes de pompe 120, en aval, aspirant l'huile filtrée. La valve V3 autorisant l'écoulement de l'huile filtrée jusqu'au réservoir d'huile propre est alors ouverte alors que la valve V2 est fermée. Les cuves 10 comprennent des surverses de trop plein TP10 par lesquelles l'huile sale peut déborder lorsque le niveau dans la cuve 10 est trop haut. L'huile sale ayant débordé est alors retournée au réservoir d'huile sale 2.

Les dispositifs de filtration 1 peuvent comprendre chacun un ou plusieurs plateaux 11, 12 dans le volume interne de la cuve, amovibles, configurés à être retirés hors de la cuve par une ouverture supérieure fermée par un ou plusieurs couvercles.

Chacun des éléments plateaux 11,12 reçoit de manière amovible des cartouches de filtration, chacun des plateaux, creux constituant un collecteur pour l'huile filtrée par les cartouches dudit plateau, chacun des plateaux comprenant une sortie d'huile filtrée 111, 121 connectée de manière amovible à une sortie correspondante de la cuve 10 par l'intermédiaire d'un raccord.

De manière notable, et au moins selon un mode de réalisation, le ou les plateaux sont rectangulaires, comme illustré aux figures 12, 13, les cartouches étant vissées sur une face inférieure du plateau, sur toute la surface rectangulaire du plateau, les cartouches de filtration juxtaposés les unes par rapport aux autres, à la verticale. Chaque plateau est typiquement équipé de pieds, typiquement au nombre de quatre, aux quatre coins du rectangle, et tel qu'illustré à la figure 12. Ces pieds permettant de poser le plateau sur une surface de pose, sans que le poids du plateau ne repose sur les cartouches. Le plateau présente encore des oreilles de manutention, sur le dessus au nombre de quatre sur la figure 12, qui permettent d'extraire le plateau et les cartouches suspendu au plateau hors de la cuve, typiquement au moyen d'un treuil lorsque les cartouches doivent être changées lors de la maintenance.

Au fur et à mesure des opérations de laminage et de filtration, le média filtrant retient les particules métalliques et se charge en particules formant des boues sur le média filtrant en particulier sur sa surface externe.

Le média filtrant est typiquement tubulaire cylindrique la filtration de l'huile s'opérant de l'extérieur vers l'intérieur, avant que l'huile filtrée, interne au cylindre soit évacuée de la cartouche pour s'écouler dans la cavité interne du plateau 11 ou 12.

On utilise des cartouches de filtration nettoyables par contre-courant, et on procède à un décolmatage des cartouches, typiquement à intervalle de temps régulier. L'opération de décolmatage est mise en œuvre, sur les dispositifs de filtration 1 un par un. On, met en œuvre un contre-courant de fluide typiquement de l'air comprimé sur l'un des dispositifs de filtration, et alors que les autres dispositifs de filtration, disposés en parallèle, assurent la filtration de l'huile de laminage.

On conserve un débit de filtration par les autres dispositifs de filtration, pour assurer une continuité des opérations de laminage pour lesquelles le laminoir est toujours refroidi au débit nominal, le cas échéant en utilisant le réservoir d'huile sale et le réservoir d'huile propre comme réservoirs tampon, et comme décrit dans l'état de la technique. Dans un tel mode de réalisation, le niveau d'huile dans le réservoir d'huile propre peut être amené à diminuer, lorsque le débit de filtration est diminué des capacités d'un dispositif de filtration et le temps des opérations de décolmatage sur ce filtre, le niveau d'huile sale augmentant alors.

Toutefois, et selon un mode de réalisation avantageux se distinguant de l'état de la technique cité en introduction, lors du décolmatage d'un des dispositifs de filtration 1 du système de filtration primaire les autres dispositifs de filtration à plateau(x), disposés en parallèle, peuvent être configurés pour assurer la filtration de l'huile de laminage selon un débit de filtration couvrant le débit nominal du laminoir pour les opérations de laminage.

Dans un tel mode de réalisation, on prévoit volontairement un dispositif de filtration 1 supplémentaire au nombre qui est normalement requis pour couvrir les besoins en termes de débit nominale du laminoir. Autrement dit, et lors du procédé filtration et de recyclage, le débit d'huile filtrée arrivant au réservoir d'huile sale est toujours surcapacitaire par rapport au débit nominal qui est prélevé pour refroidir le laminoir, même lorsque le débit de filtration est diminué d'un dispositif de filtration lors de son décolmatage par contre-courant. A la figure 7, on comprend qu'en fonctionnement, lors de filtration, le réservoir d'huile propre déborde constamment de la surverse de trop plein TP3, l'huile propre ayant débordé du réservoir d'huile 2 propre étant retournée au réservoir d'huile sale 3, typiquement par gravité.

L'installation de filtration et de recyclage comprend ainsi un système de décolmatage 9 des cartouches des dispositifs de filtration 1 configuré pour mettre en œuvre un contre-courant de fluide.

Un tel système de décolmatage 9 comprend typiquement une réserve d'air comprimé 90, et un ensemble de conduite d'air comprimé qui permet d'insuffler de l'air comprimé à contre-courant, dans les cartouches de filtration, directement dans les cuves 10, et sans avoir à retirer les cartouches ni les plateaux, et comme visible à la figure 7.

Toujours à la figure 7, on remarque que le dispositif de filtration 1 est à deux plateaux, et que deux valves V91, V92 sont prévues sur le circuit d'air comprimé. Lorsque la valves V91 est ouverte et la valve V92 est fermée, on décolmate les cartouches du premier plateau 11 seulement, et lorsque la valve V91 est fermée et que la valve V92 est ouverte, on décolmate seulement les cartouches du deuxième plateau 12. A cet effet, chaque plateau 11 ou 12 est équipé d'une entrée air comprimé 112, 122 et comme visible à la figure 12.

Ainsi, on met en œuvre le contrecourant de fluide sur l'un des dispositifs de filtration à plateaux, le contre-courant de fluide étant mis en œuvre de préférence plateau par plateau, et alors que les autres dispositifs de filtration 1 disposés en parallèle, assurent la filtration de l'huile de laminage, l'opération de décolmatage générant des boues constituées par l'huile fortement chargée en particules métalliques décollées des cartouches de filtration de la filtration primaire.

Selon un mode de réalisation avantageux, le ou les plateaux sont disposés sur un unique niveau, de manière juxtaposée, comme illustré pour le premier plateau 11 et le deuxième plateau 12 à la figure 7 qui sont coplanaires, les cartouches suspendues vers le bas, et de sorte que les boues générées par le contrecourant de fluide chutent directement dans le fond de la cuve 1 du dispositif de filtration 1. Autrement dit, on évite le défaut rencontré dans l'état de la technique illustré à la figure 2, et comprenant par cuve 10' du dispositif de filtration plusieurs plateaux superposés 11' à 15', à savoir que le boue décolmatée par contre-courant d'un plateau supérieur sont difficiles à évacuer car elles viennent se répandre sur un plateau inférieur, sans chuter directement dans le fond de la cuve comprenant le drain permettant l'évacuation des boues.

On notera que l'opération de décolmatage par contre-courant de fluide est réalisée après avoir vidé la cuve de son huile sale. A cet effet on utilise la pompe 120, en fermant la valve V3 et en ouvrant la valve V2 autorisant le vidage de l'huile sale de la cuve 10 dans le réservoir d'huile sale 2.

L'opération de décolmatage génère des boues constituées par l'huile fortement chargée en particules métalliques qui sont récupérées en fond de cuves 10. Ces boues sont acheminées par une conduite 150, lorsque la valve V150 est ouverte jusqu'un système de séparation secondaire 7 qui assure une séparation par décantation de l'huile et des particules contenues dans les boues, obtenant une boue concentrée en particules qui est évacuée, et une huile déchargée en particules est de préférence renvoyée au réservoir d'huile sale 2.

Selon la présente divulgation, et avantageusement, le système de séparation secondaire 7 par décantation comprend :
- un réservoir tampon 70 configuré pour collecter les boues générées par l'opération de décolmatage des cartouche de la filtration primaire,
- un décanteur 71 configuré pour assurer la sédimentation des particules contenues dans les boues dans un fond 712 du décanteur, présentant une entrée d'alimentation 710 des boues et une sortie 711 pour les huiles décantées, déchargées en particules métalliques,
- un dispositif motorisé de régulation comprenant au moins une pompe 72 (motorisée, par exemple une pompe à vis) configuré pour alimenter selon un débit contrôlé l'entrée d'alimentation 710 du décanteur 71 à partir des boues du réservoir tampon 70.

A la figure 7, on remarque que les boues générées par les opérations de décolmatage et collectées tour-à-tour dans les différentes cuves des dispositifs de filtration sont acheminées par un système de pompe 69, permettant notamment leur relevage jusqu'au réservoir tampon 70.

La contenance du réservoir d'huile sale 70 est prévue pour recevoir le contenu des boues provenant du décolmatage de plusieurs dispositifs de filtration.

Selon le procédé, on sépare les boues dans le décanteur 71 en des particules qui sédimentent dans le fond 712 du décanteur 71 et en une huile déchargée des particules qui s'évacue par la sortie 711 en assurant un débit contrôlé, par ladite au moins une pompe 72, des boues alimentant le décanteur de sorte à garantir une décantation continue et sans turbulence dans le décanteur 71 entre ladite entrée d'alimentation 710 et ladite sortie 711 du décanteur.

Avantageusement, la décantation continue et sans turbulence s'étend sur une durée supérieure à la durée séparant deux opérations de décolmatage consécutives des deux dispositifs de filtration de la filtration primaire, et contrairement à l'état de la technique précité pour lequel à chaque décolmatage d'un dispositif de filtration, les boues déchargées viennent perturber les opérations de décantation dans le décanteur.

Selon un mode de réalisation avantageux, ledit décanteur présentant un volume utile entre ladite entrée d'alimentation 710 et la sortie 711, de contenance V, on régule le débit d'alimentation D, de sorte que le temps de décantation moyen égale au rapport de V/D est supérieure à 10 heures, par exemple compris entre 30 heures et 100 heures, tel que 60 heures entre ladite entrée 710 et la sortie 711.

La durée effective de décantation sans turbulence selon la présente divulgation, supérieure à 10 heures, par exemple de 60 heures est très largement supérieure à la durée de décantation effective (sans turbulence) qui est tout au plus de 2-3 heures dans l'état de la technique en raison des turbulences crées par les arrives de boues.

La qualité de l'huile déchargée s'échappant par la sortie 711 du décanteur est sensiblement meilleure à celle qui peut être obtenue par la seule décantation selon l'état de la technique précité pour laquelle la durée effective de décantation n'excède jamais la durée entre deux décolmatages de la filtration primaire, soit 2-3 heures au maximum.

Encore, et selon un mode de réalisation avantageux, le système de séparation secondaire 7 assurant la séparation des boues en la boue concentrée et en huile déchargée des particules métalliques est dépourvu d'un dispositif de filtration à cartouches de sorte que la séparation secondaire est obtenue par décantation uniquement, et contrairement à l'état de la technique illustré à la figure 4 qui comprend des dispositifs de filtration 210' 211', en série des cuves de décantations 210', 211'.

On supprime le besoin de tels dispositifs de filtration 210', 211', ainsi que les inconvénients générés par ces dispositifs 210', 211', à savoir un changement fréquent des cartouches, et la mise en œuvre d'opérations de décolmatage pour ces filtres secondaires, qui à leur tour génèrent des nuisances et des turbulences dans les cuves de décantation.

Selon un mode de réalisation, et tel que compréhensible à la vue de coupe de la figure 10, le décanteur 71 comprend une unique cuve de décantation s'étendant en longueur suivant une direction longitudinale X. Ladite entrée d'alimentation 710 pour les boues est prévue à l'une, dite proximale des extrémités longitudinales de la cuve de décantation, et la sortie 711 à l'autre dite distale des extrémités longitudinales.

Selon un mode de réalisation, tel que visible à la figure 10, la cuve de décantation peut être une cuve sans cloison transversale à la direction longitudinale entre l'entrée 710 pour les boues et la sortie pour l'huile décantée 711. Compte tenu du dispositif de régulation qui assure un faible débit des boues, sans turbulence dans la cuve, des telles cloisons ne sont plus nécessaires.

On remarque que la cuve peut présenter une section en V, selon un plan perpendiculaire à la direction longitudinale, avec deux parois inclinées 713, 714 l'une vers l'autre convergentes vers le fond 712 de la cuve.

Un convoyeur motorisé 8, immergé dans la cuve de décantation, peut être disposé au fond de la cuve de décantation et s'étend suivant la direction longitudinale X.

Ce convoyeur comporte des racleurs 80 configurés pour racler le fond de la cuve de décantation et ramener les sédiments au niveau d'une extrémité où les sédiments sont soutirés, en particulier au niveau de l'extrémité proximale. Ce convoyeur peut comprendre deux courroies (ou deux chaines), montées en parallèles et orientées suivant la direction longitudinale X. Les racleurs 80 sont espacés et réparties, le long de la paire de courroies (ou de chaines). Ils sont chacun assujetti par leurs extrémités aux deux courroies (ou aux deux chaines), en s'étendant suivant la direction transversale. Un moteur M8 entraine une paire de roues d'entrainement qui assure l'entrainement de préférence continu des courroies (ou des chaînes), et à une vitesse très faible, typiquement inférieure à 1m/jour de sorte à éviter toute turbulence et ne pas perturber les sédimentations des particules dans le fond.

Les particules poussées à l'extrémité proximale sont soutirées par une pompe 73, et acheminées jusqu'à un conteneur pour les boues concentrées. La sortie d'alimentation 711 est de préférence une surverse définissant le volume de fluide dans la cuve de décantation.

D'une manière générale, et compte tenu de la durée effective de la décantation (sans turbulence) on remarque que l"huile s'échappant de la sortie de décantation 711 est suffisamment déchargée en particules métalliques pour être renvoyée jusqu'au réservoir d'huile sale, sans filtration supplémentaire, et sans risque de dégradation pour les cartouches de filtration de la filtration primaire, et contrairement à l'état de la technique précité.

La présente divulgation concerne encore une installation de recyclage et de filtration d'huile de laminage présentant un circuit comprenant, successivement, selon le sens d'écoulement de l'huile :
- un réservoir d'huile sale 2, collectant les huiles de laminage provenant d'un laminoir,
- un système de filtration 100 comprenant plusieurs dispositifs de filtration 1 d'huile configurés pour réaliser une filtration de l'huile en parallèle, chaque dispositif de filtration présentant une cuve 10 recevant un ensemble de cartouches de filtration, la cuve comprenant une entrée pour de l'huile à filtrer et au moins une sortie pour l'huile filtrée ayant traversé un média filtrant des cartouches, les cartouches de filtration étant nettoyables par contre-courant
- un réservoir d'huile propre 3,
- un système de décolmatage des cartouches des dispositifs de filtration 1 configuré pour mettre en œuvre un contre-courant de fluide, sur l'un des dispositifs de filtration, et alors que les autres dispositifs de filtration, disposés en parallèle, assurent la filtration de l'huile de laminage, l'opération de décolmatage générant des boues constituées par l'huile fortement chargée en particules métalliques
- un système de séparation secondaire 7, assurant une séparation par décantation de l'huile et des particules contenues dans les boues obtenant une boue concentrée en particules métalliques qui est évacuée, et une huile déchargée en particule qui envoyée au réservoir d'huile sale 2.

Selon la présente divulgation, le système de séparation secondaire 7 par décantation comprend :
- un réservoir tampon 70 dimensionné pour collecter les boues générées par l'opération de décolmatage des cartouches de la filtration primaire,
- un décanteur 71 configuré pour assurer la sédimentation des particules contenues dans les boues dans le fond du décanteur, présentant une entrée d'alimentation 710 des boues et une sortie 711 pour les huiles décantées,
- un dispositif motorisé de régulation comprenant au moins une pompe 72 configuré pour alimenter selon un débit contrôlé l'entrée d'alimentation 710 du décanteur 71 à partir des boues du réservoir tampon.

Le système de séparation secondaire 7 est configuré pour séparer les boues dans le décanteur en des particules qui sédimentent dans le fond du décanteur et en une huile déchargée des particules en assurant un débit contrôlé (par ladite au moins une pompe 72) des boues alimentant le décanteur de sorte à garantir une décantation continue et sans turbulence dans le décanteur 71 sur une durée supérieure à la durée séparant deux opérations de décolmatage consécutives des deux dispositifs de filtration de la filtration primaire.

L'installation selon la présente divulgation peut présenter le fonctionnement décrit de l'installation précédemment décrite en lien avec la mise en œuvre du procédé de filtration et de recyclage, et notamment.

Selon la présente divulgation, le décanteur peut comprendre une unique cuve de décantation s'étendant en longueur suivant une direction longitudinale et dans lequel ladite entrée d'alimentation 710 pour les boues est prévue à l'une dite proximale des extrémités longitudinales de la cuve de décantation, la sortie 711 à l'autre dite distale des extrémités longitudinales.

La cuve de décantation peut être dépourvue de cloison transversale à la direction longitudinale X entre l'entrée 710 pour les boues et la sortie 711 pour l'huile décantée. Notamment la cuve peut présenter une section en V, selon un plan perpendiculaire à la direction longitudinale, avec deux parois inclinées 713, 714 l'une vers l'autre convergent vers le fond 72 de la cuve de décantation.

Un convoyeur motorisé 8, immergé, peut être disposé au fond de la cuve de décantation et s'étend suivant la direction longitudinale X comportant des racleurs 80 configurés pour racler le fond de la cuve décantation et ramener les sédiments au niveau d'une extrémité où les sédiments sont soutirés, en particulier de l'extrémité proximale. La sortie 711 peut être une surverse définissant le volume de fluide dans la cuve de décantation du décanteur 71.

Les dispositifs de filtration 1 peuvent comprennent chacun un ou plusieurs plateaux 11, 12 dans le volume interne de la cuve, amovibles, configurés à être retirés hors de la cuve par une ouverture supérieure fermée par un couvercle, chacun des plateaux recevant de manière amovible des cartouches de filtration, chacun des plateaux, creux constituant un collecteur pour l'huile filtrée par les cartouches dudit plateau, chacun des plateaux comprenant une sortie d'huile filtrée 111, 121 connectée de manière amovible à une sortie correspondante de la cuve par l'intermédiaire d'un raccord.

Le plateau peut être unique dans la cuve 10. Alternativement la cuve 10 peut recevoir plusieurs plateaux 11, 12 qui peuvent être avantageusement disposés juxtaposés sur un unique niveau, les cartouches suspendues vers le bas, et de sorte que les boues générées par le contrecourant de fluide chutent directement dans le fond de la cuve 10 du dispositif de filtration 1. Notamment le nombre de plateaux 11,12 par dispositif de filtration 1 peut être égal à deux, les plateaux juxtaposés sur un même niveau, voire un nombre supérieur tel que trois, ou quatre plateaux juxtaposés.

Encore et selon une caractéristique avantageuse de l'agencement comprenant la cuve de décantation et les dispositifs de filtration 1 du système de filtration visible aux figures 9, 10 et 15 notamment, les cuves 10 des dispositifs de filtration 1 assurant la filtration primaire, voire le réservoir tampon 70 peuvent être agencés au-dessus du décanteur 71 assurant la séparation secondaire, et en particulier au-dessus de la cuve de décantation du décanteur.

En particulier, les cuves 10 des dispositifs de filtration 1, voire le réservoir tampon 70, sont disposés juxtaposés en série au-dessus de la cuve de décantation du décanteur 71, en série le long de la direction longitudinale X de la cuve de décantation, et donc sur un même niveau.

Les cuves 10 des dispositifs de filtration juxtaposés sont de sections rectangulaires, selon un plan horizontal, s'étendent en longueur selon la direction transversale Y à la cuve de décantation du décanteur et en largeur suivant la direction longitudinale X de la cuve de décantation du décanteur 71.

Dans un tel cas, la cuve 1 de chaque dispositif de filtration 1 reçoit plusieurs plateaux (tels que deux plateaux, avec un premier plateau 11 et un deuxième plateau 12) les plateaux sont alors décalés suivant la direction transversale Y, tel qu'illustré à la figure 11. Les plateaux, notamment le premier plateau 11 et le deuxième plateau 12 peuvent être de section rectangulaire de sorte à s'emboiter au mieux dans la cuve 10 , également de section rectangulaire. L'huile filtrée collectée par le premier plateau 11 s'échappe par une tubulure saillante sous le plateau 110 se terminant par la sortie 111, située au-dessous des cartouches de filtration fixées sur la face inférieure du plateau. L'huile filtrée collectée par le deuxième plateau 11 s'échappe par une tubulure saillante sous le plateau 110 se terminant par la sortie 121, située au-dessous des cartouches de filtration fixées sur la face inférieure du plateau.

Ces sorties 111, 121 des plateaux sont connectées à des raccords dans le fond de la cuve, assurant la sortie de l'huile filtrée par deux conduites en parallèle 1501, 1502 saillantes sous la cuve 10, qui s'étendent latéralement entre un inter espace entre la cuve du dispositif de filtration 11, supérieure, et la cuve de décantation du décanteur 71, inférieure.

Lors de la filtration l'huile sale entre dans la cuve par la conduite 1503, qui débouche dans le fond de la cuve. Cette conduite 1503 permet encore, lors du décolmatage, l'évacuation des boues hors de la cuve 10.

Selon un mode de réalisation avantageux illustré à la figure 15, la cuve de décantation du décanteur 71 comprend, suivant la direction longitudinale X de la cuve, plusieurs segments S1, S2, S3, S4, S5, S6, S7 de cuve soudés les uns aux autres, et selon un pas (repéré Pa à la figure 15) suivant la direction longitudinale de la cuve de décantation, correspondant à la dimension d'un dispositif de filtration 1, suivant la direction longitudinale X, voire également à la dimension du réservoir tampon 70 suivant la direction longitudinale.

Les segments S1, S2, S3, S4, S5, S6, S7 formant la cuve de décantation de la séparation secondaire, d'une part, et les dispositifs de filtration 1, voire le réservoir tampon, superposés aux segments, d'autre part, peuvent être respectivement positionnés, en recouvrement les uns par rapport aux autres suivant la direction longitudinale.

Par exemple à la figure 15 :
- le premier segment S1 de la cuve de décantation, présentant la même empreinte suivant la direction X, voire également de préférence suivant la direction transversale Y que le réservoir tampon 70 positionné au-dessus et en recouvrement de ce premier segment S1,
- le deuxième segment S2 de la cuve de décantation, présentant la même empreinte suivant la direction X, voire également de préférence suivant la direction transversale Y que le premier dispositif de filtration 1 positionné au-dessus et en recouvrement de ce premier segment S2, et ainsi de suite jusqu'au septième segment S7, à savoir que le septième segment S7 de la cuve de décantation présente la même empreinte suivant la direction X, voire également de préférence suivant la direction transversale Y que le sixième dispositif de filtration 1 positionné au-dessus et en recouvrement de ce septième segment S7.

En fonction des besoins en termes débit nominal du laminoir, il est possible de répondre en modifiant le nombre de segments et de dispositifs de filtration correspondant, la cuve de filtration et les segments étant dimensionnés pour permettre leur transport par conteneur maritime.

On remarque que les cuves 10 des dispositifs de filtration, 1 voire également le réservoir tampon 70 sont contenus dans l'empreinte de la cuve de décantation du décanteur 71

A la figure 16, on remarque que le réservoir d'huile sale 2 peut être avantageusement positionné dans une cave à proximité immédiate du laminoir, donnant accès au-dessous de la cage du laminoir et alors que les dispositifs de filtration 1 du système de filtration primaire, d'une part, et le décanteur 7 et le réservoir tampon 70 du système de séparation secondaire, d'autre part, sont situés à un niveau supérieur. Cette possibilité est permise par une réduction de la taille du réservoir d'huile sale, inférieur à 100m³, notamment inférieur à 80m³, voire inférieur à 70m³, par l'utilisation de dispositif de filtration présentant un faible nombre de plateau, ou encore en prévoyant un nombre de dispositif de filtration de sorte que le débit de filtration soit toujours surcapacitaire par rapport au débit nominal requis du laminoir

### Application industrielle

Le procédé de recyclage et de filtration, ainsi que l'installation trouvent une application particulière pour la filtration d'huile de laminage de laminoir 20 cylindres utilisée pour le laminage à froid d'acier.

La présente divulgation trouve une application particulière pour le laminage de bande d'acier, de fines épaisseurs et présentant un état de surface à très faible rugosité dite réfléchissant ou ultra-réfléchissante pour l'homme du métier, et qui nécessite l'utilisation d'une huile filtrée de haute qualité.

### Liste des signes de référence

### Etat de la technique (figures 1 à 5) :

- M'. Laminoir,
- R'. Rails des dispositifs porte-bobines

### Filtration primaire

- 1'. Dispositif de filtration (à cinq plateau superposés),
- 10' Cuve,
- 11', 12', 13', 14' et 15'. Plateaux,
- 16'. Ouverture pour l'huile sale,
- 17'. Ouverture de trop plein,
- 18' Sortie d'huile filtrée,
- 19'.Conduit vertical
- 2'.Réservoir d'huile sale,
- 3' Réservoir d'huile propre
- 100' Système de filtration comprenant les dispositifs de filtration et pompes (filtration primaire),
- 110' système de pompes (alimentation du système de la filtration à partir de l'huile du réservoir d'huile sale),
- 120' un système de pompe (extraction de l'huile du système de filtration par dispositif de filtration),
- 4' système de pompes (alimentation du laminoir M' à partir de l'huile du réservoir d'huile propre),
- 5' système d'échangeurs (refroidissement de l'huile du réservoir d'huile propre)
- 6'. Système de valves,
- FL-AIR. Flux air décolmatage.

### Filtration secondaire,

- GC'. Groupe de décantation,
- 150' Conduite d'amenée des boues de décolmatage jusqu'au groupe de décantation,
- C1', C2', C3', C4', C5'. Respectivement première, deuxième, troisième quatrième et cinquième cuve de décantation,
- TP2', TP4'. Surverse de trop plein respectivement pour le deuxième et la quatrième vue de décantation,
- SCR' Vis sans fin pour la collecté des sédiments en fond de cuves (première deuxième et cinquième cuve),
- 220'. Pompe acheminant les sédiments dans la troisième cuve de décantation pour les boues concentrées,
- 210', 211'. Dispositif de filtration à cartouches mettant en œuvre une filtration secondaire,
- 230'. Pompe prélevant l'huile décantée à mi-hauteur dans la deuxième cuve et acheminant l'huile au dispositif de filtration assurant la filtration secondaire au travers du média filtrant des cartouches,
- 212' Conduite de sortie acheminant l'huile filtrée par les dispositifs de filtration de la filtration secondaire en vue du renvoie de l'huile filtrée par la filtration secondaire jusqu'au réservoir d'huile sale.

### Divulgation ('figures 6 à 16)

- M. Laminoir,
- R. Rails porte bobines

### Filtration primaire

- 1. Dispositif de filtration (à deux plateaux au même niveau),
- 10. Cuve,
- TP10 Surverse de trop plein
- 11, 12. Premier plateau et deuxième plateau juxtaposés,
- 111, 121. Sortie huile filtrée (plateau 11 et 12),
- 112, 122. Entrée air comprimé (décolmatage par contre-courant),
- 2. Réservoir d'huile sale.
- 100 Système de filtration comprenant les dispositifs de filtration et pompes (filtration primaire),
- 110 système de pompes (alimentation du système de la filtration à partir de l'huile du réservoir d'huile sale),
- 120 un système de pompe (extraction de l'huile du système de filtration par dispositif de filtration),
- 3. Réservoir d'huile propre,
- TP3. Surverse de trop plein
- 4 système de pompes (alimentation du laminoir M' à partir de l'huile du réservoir d'huile propre),
- 5 système d'échangeurs (refroidissement de l'huile du réservoir d'huile propre)
- V2, V3. Valves

### Séparation secondaire

- 150 Conduite
- V150. Valve
- 69._Pompes de relevage des boues (vers le réservoir tampon 70)
- 7. Système de séparation secondaire,
- 70. Réservoir Tampon (pour les boues),
- 71. Décanteur,
- 710. Entrée pour les boues,
- 711. Sortie pour l'huile décantée,
- 712. Fond,
- 713, 714. Parois inclinées
- 72. Pompes motorisées (régulation de l'alimentation des boues stockées dans le réservoir tampon 70 jusqu'au décanteur 71),
- 73. Pompe pour le soutirage des sédiments récoltés sur le fond du décanteur,
- 730. Réservoir pour les boues concentrées
- 8. Convoyeur motorisé,
- 80. Racleurs,

### 9 Système de décolmatage par contrecourant

- 90. Réservoir d'air comprimé,
- V91, V92. Valves (air comprimé).

## Revendications

1. Procédé de recyclage et de filtration d'huile de laminage mis en œuvre pour un laminoir (M) nécessitant un débit nominal d'huile de laminage compris entre 4000 l/min et 30000 l/min dans une installation de recyclage et de filtration d'huile présentant un circuit comprenant, successivement, selon le sens d'écoulement de l'huile :
- un réservoir d'huile sale (2), collectant les huiles de laminage provenant du laminoir
- un système de filtration (100) comprenant plusieurs dispositifs de filtration (1) d'huile configurés pour réaliser une filtration de l'huile en parallèle, chaque dispositif de filtration présente une cuve (10) recevant un ensemble de cartouches de filtration, la cuve comprenant une entrée pour de l'huile à filtrer et au moins une sortie pour l'huile filtrée ayant traversé un média filtrant des cartouches,
- un réservoir d'huile propre (3) à partir duquel le laminoir est alimentée en huile de laminage au débit nominal,
et procédé dans lequel on récupère les huiles sales de laminage chargées en particules dans le réservoir d'huile sale (2) et on assure une filtration primaire de l'huile du réservoir d'huile sale (2) en faisant circuler l'huile en parallèle dans les dispositifs de filtration (1), et on collecte l'huile filtrée dans le réservoir d'huile propre (3),
et dans lequel on utilise des cartouches de filtration nettoyables par contre-courant, et on procède à un décolmatage des cartouches d'un dispositif de filtration (1) en mettant en œuvre un contre-courant de fluide, sur ce dispositif de filtration alors que les autres dispositifs de filtration, disposés en parallèle, assurent la filtration de l'huile de laminage, l'opération de décolmatage générant des boues constituées par l'huile fortement chargée en particules métalliques
et procédé dans lequel on achemine les boues générées par l'opération de décolmatage dans un système de séparation secondaire (7), assurant une séparation par décantation de l'huile et des particules contenues dans les boues, obtenant une boue concentrée en particules qui est évacuée, et une huile déchargée en particule est renvoyée au réservoir d'huile sale (2) **caractérisé en ce que** le système de séparation secondaire (7) par décantation comprend :
- un réservoir tampon (70) configuré pour collecter les boues générées par l'opération de décolmatage des cartouches de la filtration primaire,
- un décanteur (71) configuré pour assurer la sédimentation des particules contenues dans les boues dans un fond (712) du décanteur, présentant une entrée d'alimentation (710) des boues et une sortie (711) pour les huiles décantées,
- un dispositif motorisé de régulation comprenant au moins une pompe (72) configuré pour alimenter selon un débit contrôlé l'entrée d'alimentation du décanteur (71) à partir des boues du réservoir tampon (70)
et dans lequel on sépare les boues dans le décanteur (71) en des particules qui sédimentent dans le fond (712) du décanteur et en une huile déchargée des particules qui s'évacue par la sortie (711) en assurant un débit contrôlé par ladite au moins une pompe (72) des boues alimentant le décanteur de sorte à garantir une décantation continue et sans turbulence dans le décanteur (71) entre ladite entrée d'alimentation (710) et ladite sortie (711) du décanteur, sur une durée supérieure à la durée séparant deux opérations de décolmatage consécutives de deux dispositifs de filtration de la filtration primaire.

2. Procédé de recyclage et de filtration d'huile de laminage selon la revendication 1, dans lequel ledit décanteur (71) présente un volume utile entre ladite entrée d'alimentation (710) et la sortie (711), de contenance V, et dans lequel on régule le débit d'alimentation D, de sorte que le temps de décantation moyen égale au rapport de V/D est supérieure à 10 heures, par exemple compris entre 30 heures et 100 heures, tel que 60 heures entre ladite entrée (710) et la sortie (711)

3. Procédé de recyclage et de filtration d'huile de laminage selon l'une des revendications 1 ou 2, dans lequel le décanteur (71) comprend une unique cuve de décantation s'étendant en longueur suivant une direction longitudinale et dans lequel ladite entrée d'alimentation (710) pour les boues est prévue à l'une dite proximale des extrémités longitudinales de la cuve de décantation, et la sortie (711) à l'autre dite distale des extrémités longitudinales.

4. Procédé de recyclage et de filtration d'huile de laminage selon la revendication 3, dans lequel la cuve de décantation est une cuve sans cloison transversale à la direction longitudinale entre l'entrée (710) pour les boues et la sortie pour l'huile décantée (711).

5. Procédé de recyclage et de filtration d'huile de laminage selon l'une des revendications 3 ou 4, dans laquelle la cuve présente une section en V, selon un plan perpendiculaire à la direction longitudinale, avec deux parois inclinées (713, 714) l'une vers l'autre convergent vers le fond (712) de la cuve.

6. Procédé de recyclage selon l'une des revendication 3 à 5, dans lequel dans un convoyeur motorisé (8), immergé, est disposé au fond de la cuve de décantation et s'étend suivant la direction longitudinale (X) comportant des racleurs (80) configurés pour racler le fond et ramener les sédiments au niveau d'une extrémité où les sédiments sont soutirés, en particulier au niveau de l'extrémité proximale.

7. Procédé de recyclage et de filtration d'huile de laminage selon l'une des revendications 3 à 6, dans lequel la sortie d'alimentation (711) est une surverse définissant le volume de fluide dans la cuve de décantation.

8. Procédé de recyclage et de filtration d'huile de laminage selon l'une des revendications 1 à 7, dans lequel les dispositifs de filtration (1) comprennent chacun un ou plusieurs plateaux (11, 12) dans le volume interne de la cuve (10), amovibles, configurés à être retirés hors de la cuve par une ouverture supérieure fermée par un ou plusieurs couvercles, chacun des plateaux (11,12) recevant de manière amovible des cartouches de filtration, chacun des éléments plateaux, creux constituant un collecteur pour l'huile filtrée par les cartouches dudit plateau, chacun des éléments plateaux comprenant une sortie d'huile filtrée (111, 121) connectée de manière amovible à une sortie correspondante de la cuve par l'intermédiaire d'un raccord.

9. Procédé selon la revendication 8 présentant un unique plateau ou encore plusieurs plateaux (11, 12) qui sont alors disposés juxtaposés sur un unique niveau dans la cuve (10), les cartouches suspendues vers le bas, et de sorte que les boues générées par le contrecourant de fluide chutent directement dans le fond de la cuve (10) du dispositif de filtration (1).

10. Procédé selon l'une des revendications 1 à 9, dans lequel le système de séparation secondaire (7) assurant la séparation des boues en la boue concentrée et en huile déchargée des particules métalliques est dépourvu d'un dispositif de filtration à cartouches de sorte que la séparation secondaire est obtenue par décantation uniquement.

11. Procédé selon l'une des revendications 1 à 10 dans lequel lors du décolmatage d'un des dispositifs de filtration, les autres dispositifs de filtration à plateau(x), disposés en parallèle, assurent la filtration de l'huile de laminage selon un débit de filtration couvrant le débit nominal du laminoir pour les opérations de laminage, le débit d'huile filtrée arrivant au réservoir d'huile sale étant toujours surcapacitaire par rapport au débit nominal qui est prélevé du réservoir d'huile propre (3) pour refroidir le laminoir, même lorsque le débit de filtration est diminué d'un dispositif de filtration lors de son décolmatage par contre-courant.

12. Installation de recyclage et de filtration d'huile de laminage présentant un circuit comprenant, successivement, selon le sens d'écoulement de l'huile :
- un réservoir d'huile sale (2), collectant les huiles de laminage provenant d'un laminoir,
- un système de filtration (100) comprenant plusieurs dispositifs de filtration (1) d'huile configurés pour réaliser une filtration de l'huile en parallèle, chaque dispositif de filtration présente une cuve (10) recevant un ensemble de cartouches de filtration, la cuve comprenant une entrée pour de l'huile à filtrer et au moins une sortie pour l'huile filtrée ayant traversé un média filtrant des cartouches, les cartouches de filtration étant nettoyables par contre-courant,
- un réservoir d'huile propre (3),
- un système de décolmatage (9) des cartouches des dispositifs de filtration (1) configuré pour mettre en œuvre un contre-courant de fluide, sur l'un des dispositifs de filtration (1), et alors que les autres dispositifs de filtration, disposés en parallèle, assurent la filtration de l'huile de laminage, l'opération de décolmatage générant des boues constituées par l'huile fortement chargée en particules métalliques
- un système de séparation secondaire (7), assurant une séparation par décantation de l'huile et des particules contenues dans les boues obtenant une boue concentrée en particules qui est évacuée, et une huile déchargée en particule qui est envoyée au réservoir d'huile sale (2),
**caractérisé en ce que** le système de séparation secondaire (7) par décantation comprend :
- un réservoir tampon (70) dimensionné pour collecter les boues générées par l'opération de décolmatage des cartouches de la filtration primaire,
- 'un décanteur (71) configuré pour assurer la sédimentation des particules contenues dans les boues dans le fond du décanteur, présentant une entrée d'alimentation (710) des boues et une sortie (711) pour les huiles décantées,
- un dispositif motorisé de régulation comprenant au moins une pompe (72) configuré pour alimenter selon un débit contrôlé le décanteur (71) l'entrée de l'alimentation (711) du décanteur (71) à partir des boues du réservoir tampon (70),
et dans lequel le système de séparation secondaire (7) est configuré pour séparer les boues dans le décanteur en des particules qui sédimentent dans le fond du décanteur et en une huile déchargée des particules en assurant un débit contrôlé par ladite au moins une pompe (72) des boues alimentant le décanteur de sorte à garantir une décantation continue et sans turbulence dans le décanteur (71) sur une durée supérieure à la durée séparant deux opérations de décolmatage consécutives de deux dispositifs de filtration de la filtration primaire.

13. Installation selon la revendication 12 dans laquelle le décanteur comprend une unique cuve de décantation s'étendant en longueur suivant une direction longitudinale (X) et dans lequel ladite entrée d'alimentation (710) pour les boues est prévue à l'une dite proximale des extrémités longitudinales de la cuve de décantation, la sortie (711) à l'autre dite distale des extrémités longitudinales.

14. Installation selon la revendication 13, dans laquelle la cuve de décantation est une cuve dépourvue de cloison transversale à la direction longitudinale (X) entre l'entrée (710) pour les boues et la sortie (711) pour l'huile décantée.

15. Installation selon la revendication 13 ou 14, dans laquelle la cuve présente une section en V, selon un plan perpendiculaire à la direction longitudinale, avec deux parois inclinées (713, 714) l'une vers l'autre convergentes vers le fond (72) de la cuve de décantation.

16. Installation selon l'une des revendications 13 à 15 dans laquelle, un convoyeur motorisé (8), immergé, est disposé au fond de la cuve de décantation et s'étend suivant la direction longitudinale (X) comportant des racleurs (80) configurés pour racler le fond de la cuve de décantation et ramener les sédiments au niveau d'une extrémité où les sédiments sont soutirés, en particulier de l'extrémité proximale.

17. Installation selon l'une des revendications 13 à 16 dans laquelle la sortie (711) est une surverse définissant le volume de fluide dans la cuve de décantation du décanteur (71).

18. Installation selon l'une des revendications 12 à 17, dans laquelle les dispositifs de filtration (1) comprennent chacun un ou plusieurs plateaux (11, 12) dans le volume interne de la cuve, amovibles, configurés à être retirés hors de la cuve par une ouverture supérieure fermée par un couvercle, chacun des éléments plateaux recevant de manière amovible des cartouches de filtration, chacun des plateaux, creux constituant un collecteur pour l'huile filtrée par les cartouches dudit plateau, chacun des plateaux comprenant une sortie d'huile filtrée (111, 121) connectée de manière amovible à une sortie correspondante de la cuve par l'intermédiaire d'un raccord.

19. Installation selon la revendication 18 présentant un unique plateau ou plusieurs plateaux qui sont alors disposés juxtaposés sur un unique niveau dans la cuve (10), les cartouches suspendues vers le bas, et de sorte que les boues générées par le contrecourant de fluide chutent directement dans le fond de la cuve (10) du dispositif de filtration (1).

20. Installation selon l'une des revendications 12 à 19, dans laquelle les cuves (10) des dispositifs de filtration (1) assurant la filtration primaire, voire le réservoir tampon (70), sont agencés au-dessus du décanteur (71) assurant la séparation secondaire

21. Installation selon les revendications 13 et 20, dans laquelle les cuves (10) des dispositifs de filtration (1), voire le réservoir tampon (70), sont juxtaposés en série au-dessus de la cuve de décantation du décanteur (71) le long de la direction longitudinale (X) de la cuve de décantation.

22. Installation selon la revendication 19 et 21, présentant plusieurs plateaux juxtaposés sur un unique niveau dans la cuve (10) et dans lequel les plateaux juxtaposés sont décalés suivant la direction transversale (Y) à la cuve de décantation du décanteur (71).

23. Installation selon la revendication 21 ou 22 dans laquelle les cuves (10) juxtaposées des dispositifs de filtration (1) sont de sections rectangulaires, selon un plan horizontal, et s'étendent en longueur selon la direction transversale (Y) à la cuve de décantation du décanteur et en largeur suivant la direction longitudinale (X) de la cuve de décantation du décanteur (71)

24. Installation selon l'une des revendications 21 à 23 dans laquelle la cuve de décantation du décanteur (71) comprend, suivant la direction longitudinale (X) de la cuve, plusieurs segments (S1, S2, S3, S4, S5, S6, S7) de cuve soudés les uns aux autres, et selon un pas (Pa), suivant la direction longitudinale de la cuve de décantation, correspondant à la dimension d'un dispositif de filtration (1), suivant la direction longitudinale (X), voire à la dimension du réservoir tampon (70) suivant la direction longitudinale, les segments (S1, S2, S3, S4, S5, S6, S7) formant la cuve de décantation de la séparation secondaire, d'une part, et les dispositifs de filtration (1), voire le réservoir tampon (70) superposés aux segments, d'autre part, étant respectivement positionnés, en recouvrement les uns par rapport aux autres suivant la direction longitudinale.

25. Installation selon l'une des revendications 21 à 24 dans laquelle les cuves (10) des dispositifs de filtration (1), voire également le réservoir tampon (70), sont contenus dans l'empreinte de la cuve de décantation du décanteur (71)

26. Installation selon l'une des revendication 12 à 25, dans laquelle le réservoir d'huile sale (2) est positionné dans une cave à proximité immédiate du laminoir (M), donnant accès au-dessous de la cage du laminoir (M) et alors que les dispositifs de filtration (1) du système de filtration primaire, d'une part, et le décanteur (71) et le réservoir tampon (70) du système de séparation secondaire, d'autre part, sont situés à un niveau supérieur.

## Patentansprüche

1. Verfahren zum Recyceln und Filtern von Walzöl, das für ein Walzwerk (M), das einen Nenndurchfluss von Walzöl zwischen 4000 I/min und 30000 l/min benötigt, in einer Ölrecycling- und -filteranlage implementiert wird, die einen Kreislauf aufweist, umfassend nacheinander in der Ölströmungsrichtung:
- einen Schmutzöltank (2), der Walzöle aus dem Walzwerk sammelt
- ein Filtersystem (100), umfassend mehrere Ölfiltervorrichtungen (1), die zum Ausführen einer parallelen Filtration des Öls konfiguriert sind, wobei jede Filtervorrichtung eine Wanne (10) aufweist, die einen Satz von Filterpatronen aufnimmt, die Wanne umfassend einen Einlass für das zu filternde Öl und mindestens einen Auslass für das gefilterte Öl, das ein Filtermedium der Patronen durchlaufen hat,
- einem Reinöltank (3), aus dem das Walzwerk bei dem Nenndurchfluss mit Walzöl versorgt wird,
und wobei in dem Verfahren die Walzschmutzöle, die mit Partikeln beladen sind, in dem Schmutzöltank (2) abgefangen werden und eine Primärfiltration des Öls in dem Schmutzöltank (2) durch paralleles Zirkulierenlassen des Öls in den Filtervorrichtungen (1) sichergestellt wird und das gefilterte Öl in dem Reinöltank (3) gesammelt wird,
und wobei Filterpatronen verwendet werden, die durch den Gegenstrom reinigbar sind, und mit einer Abreinigung der Patronen einer Filtervorrichtung (1) durch Implementieren eines Fluidgegenstroms auf dieser Filtervorrichtung fortgefahren wird, während die anderen, parallel angeordneten Filtervorrichtungen die Filtration des Walzöls sicherstellen, wobei der Abreinigungsvorgang Schlämme erzeugt, die aus dem Öl bestehen, das mit Metallpartikeln stark beladen ist, und in dem Verfahren die Schlämme, die durch den Abreinigungsvorgang erzeugt werden, in ein sekundäres Trennsystem (7) transportiert werden, das durch Dekantieren eine Trennung des Öls und der Partikel sicherstellt, die in den Schlämmen enthalten sind, wodurch ein Schlamm mit Partikelkonzentration erhalten wird, der abgelassen wird, und ein Öl, das von Partikeln entlastet ist, in den Schmutzöltank (2) zurückgeführt wird, **dadurch gekennzeichnet, dass** das sekundäre Trennsystem (7) durch Dekantieren umfasst:
- einen Puffertank (70), der zum Sammeln der Schlämme konfiguriert ist, die durch den Abreinigungsvorgang der Patronen der Primärfiltration erzeugt werden,
- einen Dekanter (71), der zum Sicherstellen der Absetzung der Partikel, die in den Schlämmen enthalten sind, an einem Boden (712) des Dekanters konfiguriert ist, der einen Versorgungseinlass (710) für Schlämme und einen Auslass (711) für die dekantierten Öle aufweist,
- eine motorisierte Regelvorrichtung, umfassend mindestens eine Pumpe (72), die zum Versorgen des Versorgungseinlasses des Dekanters (71) mit Schlämmen des Puffertanks (70) mit einer kontrollierten Durchflussrate konfiguriert ist, und wobei die Schlämme in dem Dekanter (71) in Partikel, die sich an dem Boden (712) des Dekanters absetzen, und in ein Öl getrennt werden, das von Partikeln entlastet ist, das durch den Auslass (711) abgelassen wird, wobei eine Durchflussrate, die durch die mindestens eine Pumpe (72) kontrolliert wird, der Schlämme sichergestellt wird, die den Dekanter versorgen, um ein durchgehendes und turbulenzfreies Dekantieren in dem Dekanter (71) zwischen den Versorgungseinlass (710) und dem Auslass (711) des Dekanters über eine Dauer zu gewährleisten, die größer als die Dauer ist, die die zwei aufeinanderfolgenden Abreinigungsvorgänge von zwei Filtervorrichtungen der Primärfiltration trennt.

2. Verfahren zum Recyceln und Filtern von Walzöl nach Anspruch 1, wobei der Dekanter (71) zwischen dem Versorgungseinlass (710) und dem Auslass (711) ein Nutzvolumen mit Inhalt V aufweist und wobei die Versorgungsdurchflussrate D so geregelt wird, dass die durchschnittliche Dekantierzeit, die gleich dem Verhältnis V/D ist, mehr als 10 Stunden beträgt, beispielsweise zwischen 30 und 100 Stunden, wie 60 Stunden zwischen dem Versorgungseinlass (710) und dem Auslass (711).

3. Verfahren zum Recyceln und Filtern von Walzöl nach einem der Ansprüche 1 oder 2, wobei der Dekanter (71) eine einzelne Dekantierwanne umfasst, die sich der Länge nach in einer Längsrichtung erstreckt, und wobei der Versorgungseinlass (710) für die Schlämme an einem proximalen der Längsenden der Dekantierwanne und der Auslass (711) an dem anderen distalen der Längsenden vorgesehen ist.

4. Verfahren zum Recyceln und Filtern von Walzöl nach Anspruch 3, wobei die Dekantierwanne eine Wanne ohne Zwischenwand quer zu der Längsrichtung zwischen dem Einlass (710) für die Schlämme und dem Auslass für das dekantierte Öl (711) ist.

5. Verfahren zum Recyceln und Filtern von Walzöl nach einem der Ansprüche 3 oder 4, wobei die Wanne entlang einer ebenen Fläche senkrecht zu der Längsrichtung einen V-förmigen Querschnitt mit zwei zueinander geneigten Wänden (713, 714) aufweist, die zu dem Boden (712) der Wanne hin zusammenlaufen.

6. Recyclingverfahren nach einem der Ansprüche 3 bis 5, wobei ein motorisierter, untergetauchter Förderer (8) an dem Boden der Dekantierwanne angeordnet ist und sich in der Längsrichtung (X) erstreckt, der Schaber (80) vorweist, die zum Abschaben des Bodens und Zurückbringen der Sedimente zu einem Ende konfiguriert sind, an dem die Sedimente entnommen werden, insbesondere dem proximalen Ende.

7. Verfahren zum Recyceln und Filtern von Walzöl nach einem der Ansprüche 3 bis 6, wobei der Versorgungsauslass (711) ein Überlauf ist, der das Fluidvolumen in der Dekantierwanne definiert.

8. Verfahren zum Recyceln und Filtern von Walzöl nach einem der Ansprüche 1 bis 7, wobei die Filtervorrichtungen (1) jeweils eine oder mehrere abnehmbare Schalen (11, 12) in dem Innenvolumen der Wanne (10) umfassen, die zum Entferntwerden aus der Wanne durch eine obere Öffnung konfiguriert sind, die durch eine oder mehrere Abdeckungen verschlossen ist, wobei jede der Schalen (11, 12) auf abnehmbare Weise Filterpatronen aufnimmt, wobei jedes der hohlen Schalenelemente einen Sammler für das Öl bildet, das durch die Patronen der Schale gefiltert wird, jedes der Schalenelemente umfassend einen Auslass (111, 121) für gefiltertes Öl, der über ein Verbindungsstück auf abnehmbare Weise mit einem entsprechenden Auslass der Wanne verbunden ist.

9. Verfahren nach Anspruch 8, das eine einzige Schale oder sogar mehrere Schalen (11, 12) aufweist, die dann nebeneinander auf einer einzigen Ebene in der Wanne (10) angeordnet sind, wobei die Patronen nach unten hängen, und sodass die Schlämme, die durch den Fluidgegenstrom erzeugt werden, direkt auf den Boden der Wanne (10) der Filtervorrichtung (1) fallen.

10. Verfahren nach einem der Ansprüche 1 bis 9, wobei das sekundäre Trennsystem (7), das die Trennung der Schlämme in den konzentrierten Schlamm und in Öl, das von den Metallpartikeln entlastet ist, gewährleistet, ohne Patronenfiltervorrichtung ist, so dass die sekundäre Trennung einzig durch Dekantieren erhalten wird.

11. Verfahren nach einem der Ansprüche 1 bis 10, wobei bei dem Abreinigen einer der Filtervorrichtungen die anderen Filtervorrichtungen mit (einer) Schale(n), die parallel angeordnet sind, die Filtration des Walzöls mit einem Filtrationsdurchfluss sicherstellen, der den Nenndurchfluss des Walzwerks für die Walzvorgänge abdeckt, wobei der Durchfluss des gefilterten Öls, das in den Schmutzöltank gelangt, immer eine Überkapazität im Vergleich zu dem Nenndurchfluss besitzt, der aus dem Reinöltank (3) zum Kühlen des Walzwerks angezapft wird, selbst wenn der Filtrationsdurchfluss durch eine Filtervorrichtung während ihrer Abreinigung durch den Gegenstrom verringert wird.

12. Anlage zum Recyceln und Filtern von Walzöl, die einen Kreislauf aufweist, umfassend nacheinander in der Strömungsrichtung des Öls:
- einen Schmutzöltank (2), der Walzöle aus einem Walzwerk sammelt,
- ein Filtersystem (100), umfassend mehrere Ölfiltervorrichtungen (1), die zum Ausführen einer parallelen Filtration des Öls konfiguriert sind, wobei jede Filtervorrichtung eine Wanne (10) aufweist, die einen Satz von Filterpatronen aufnimmt, die Wanne umfassend einen Einlass für das zu filternde Öl und mindestens einen Auslass für das gefilterte Öl, das ein Filtermedium der Patronen durchlaufen hat, wobei die Filterpatronen durch den Gegenstrom reinigbar sind,
- einen Reinöltank (3),
- ein System (9) zum Abreinigen der Patronen der Filtervorrichtungen (1), das zum Implementieren eines Fluidgegenstroms auf einer der Filtervorrichtungen (1) konfiguriert ist, und während die anderen Filtervorrichtungen, die parallel angeordnet sind, die Filtration des Walzöls gewährleisten, der Abreinigungsvorgang Schlämme erzeugt, die aus Öl gebildet sind, das stark mit Metallpartikeln beladen ist
- ein sekundäres Trennsystem (7), das durch Dekantieren eine Trennung des Öls und der Partikel gewährleistet, die in den Schlämmen enthalten sind, wodurch ein Schlamm mit Partikelkonzentration, der abgelassen wird, und ein Öl erhalten wird, das an Partikeln entlastet ist, das in den Schmutzöltank (2) geführt wird,
**dadurch gekennzeichnet, dass** das sekundäre Trennsystem (7) durch Dekantieren umfasst:
- einen Puffertank (70), der zum Sammeln der Schlämme bemessen ist, die durch den Abreinigungsvorgang der Patronen der Primärfiltration erzeugt werden,
- einen Dekanter (71), der zum Sicherstellen der Absetzung der Partikel, die in den Schlämmen enthalten sind, an dem Boden des Dekanters konfiguriert ist, der einen Versorgungseinlass (710) für Schlämme und einen Auslass (711) für die dekantierten Öle aufweist,
- eine motorisierte Regelvorrichtung, umfassend mindestens eine Pumpe (72), die zum Versorgen des Dekanters (71), des Versorgungseinlasses (711) des Dekanters (71) mit Schlämmen des Puffertank (70) mit einer kontrollierten Durchflussrate konfiguriert ist, und wobei das sekundäre Trennsystem (7) zum Trennen der Schlämme in dem Dekanter in Partikel, die sich an dem Boden des Dekanters absetzen, und in Öl konfiguriert ist, das von Partikeln entlastet ist, wobei eine Durchflussrate, die durch die mindestens eine Pumpe (72) kontrolliert wird, der Schlämme sichergestellt wird, die den Dekanter versorgen, um ein durchgehendes und turbulenzfreies Dekantieren in dem Dekanter (71) über eine Dauer zu gewährleisten, die größer als die Dauer ist, die zwei aufeinanderfolgende Abreinigungsvorgänge von zwei Filtervorrichtungen der Primärfiltration trennt.

13. Anlage nach Anspruch 12, wobei der Dekanter eine einzige Dekantierwanne umfasst, die sich der Länge nach in einer Längsrichtung (X) erstreckt, und wobei der Versorgungseinlass (710) für die Schlämme an einem proximalen der Längsenden der Dekantierwanne, der Auslass (711) an dem anderen distalen der Längsenden vorgesehen ist.

14. Anlage nach Anspruch 13, wobei die Dekantierwanne eine Wanne ohne Zwischenwand quer zu der Längsrichtung (X) zwischen dem Versorgungseinlass (710) für die Schlämme und dem Auslass (711) für das dekantierte Öl ist.

15. Anlage nach Anspruch 13 oder 14, wobei die Wanne entlang einer ebenen Fläche senkrecht zu der Längsrichtung einen V-förmigen Querschnitt mit zwei zueinander geneigten Wänden (713, 714) aufweist, die zu dem Boden (72) der Dekantierwanne hin zusammenlaufen.

16. Anlage nach einem der Ansprüche 13 bis 15, wobei ein motorisierter, untergetauchter Förderer (8) an dem Boden der Dekantierwanne angeordnet ist und sich in der Längsrichtung (X) erstreckt, der Schaber (80) vorweist, die zum Abschaben des Bodens der Dekantierwanne und Zurückbringen der Sedimente zu einem Ende konfiguriert sind, an dem die Sedimente entnommen werden, insbesondere dem proximalen Ende.

17. Anlage nach einem der Ansprüche 13 bis 16, wobei der Auslass (711) ein Überlauf ist, der das Fluidvolumen in der Dekantierwanne des Dekanters (71) definiert.

18. Anlage nach einem der Ansprüche 12 bis 17, wobei die Filtervorrichtungen (1) jeweils eine oder mehrere abnehmbare Schalen (11, 12) in dem Innenvolumen der Wanne umfassen, die zum Entferntwerden aus der Wanne durch eine obere Öffnung konfiguriert sind, die durch eine Abdeckung verschlossen ist, wobei jedes der Schalenelemente auf abnehmbare Weise Filterpatronen aufnimmt, wobei jede der hohlen Schalen einen Sammler für das Öl bildet, das durch die Patronen der Schale gefiltert wird, jede der Schalen umfassend einen Auslass (111, 121) für gefiltertes Öl, der über ein Verbindungsstück auf abnehmbare Weise mit einem entsprechenden Auslass der Wanne verbunden ist.

19. Anlage nach Anspruch 18, die eine einzige Schale oder mehrere Schalen aufweist, die dann nebeneinander auf einer einzigen Ebene in der Wanne (10) angeordnet sind, wobei die Patronen nach unten hängen, und sodass die Schlämme, die durch den Fluidgegenstrom erzeugt werden, direkt auf den Boden der Wanne (10) der Filtervorrichtung (1) fallen.

20. Anlage nach einem der Ansprüche 12 bis 19, wobei die Wanne (10) der Filtervorrichtungen (1), die die Primärfiltration sicherstellen, oder auch der Puffertank (70), über dem Dekanter (71) eingerichtet sind, der die sekundäre Trennung sicherstellt.

21. Anlage nach den Ansprüchen 13 und 20, wobei die Wanne (10) der Filtervorrichtungen (1) oder auch der Puffertank (70) in Reihe über der Dekantierwanne des Dekanters (71) entlang der Längsrichtung (X) der Dekantierwanne nebeneinander liegen.

22. Anlage nach Anspruch 19 und 21, die mehrere Schalen aufweist, die in einer einzigen Ebene in der Wanne (10) nebeneinander liegen und wobei die nebeneinanderliegenden Wannen in der Querrichtung (Y) zu der Dekantierwanne des Dekanters (71) versetzt sind.

23. Anlage nach Anspruch 21 oder 22, wobei die nebeneinanderliegenden Wannen (10) der Filtervorrichtungen (1) rechteckige Querschnitte entlang einer horizontalen ebenen Fläche haben, sich in der Länge in der Querrichtung (Y) zu der Dekantierwanne des Dekanters und in der Breite in der Längsrichtung (X) der Dekantierwanne des Dekanters (71) erstrecken.

24. Anlage nach einem der Ansprüche 21 bis 23, wobei die Dekantierwanne des Dekanters (71) in der Längsrichtung (X) der Wanne mehrere Wannensegmente (S1, S2, S3, S4, S5, S6, S7), die miteinander verschweißt sind, und in einem Abstand (Pa) in der Längsrichtung der Dekantierwanne umfasst, der der Abmessung einer Filtervorrichtung (1) in der Längsrichtung (X) oder auch der Abmessung des Puffertanks (70) in der Längsrichtung entspricht, wobei die Segmente (S1, S2, S3, S4, S5, S6, S7), die die Wanne der sekundären Trennung ausbilden, einerseits und die Filtervorrichtungen (1) oder auch der Puffertank (70), die sich auf den Segmenten befinden, andererseits jeweils so positioniert sind, dass sie sich in der Längsrichtung bedecken.

25. Anlage nach einem der Ansprüche 21 bis 24, wobei die Wannen (10) der Filtervorrichtungen (1) oder auch der Puffertank (70) in dem Platzbedarf der Dekantierwanne des Dekanters (71) enthalten sind.

26. Anlage nach einem der Ansprüche 12 bis 25, wobei der Schmutzöltank (2) in einem Keller in unmittelbarer Nähe des Walzwerks (M) positioniert ist, wobei ein Zugang unter das Gerüst des Walzwerks (M) möglich ist, und während die Filtereinrichtungen (1) der Primärfilterung einerseits und der Dekanter (71) und der Puffertank (70) des Systems des sekundären Trennung andererseits auf einer höheren Ebene gelegen sind.

## Claims

1. A method for recycling and filtering rolling oil implemented for a rolling mill (M) requiring a nominal rolling oil flow rate of between 4000 L/min and 30,000 L/min in an oil recycling and filtering installation having a circuit comprising, successively, according to the direction of flow of the oil:
- a dirty oil tank (2), collecting rolling oils from the rolling mill
- a filter system (100) comprising a plurality of oil filter devices (1) configured to perform oil filtration in parallel, each filter device having a tank (10) accommodating a set of filter cartridges, the tank comprising an inlet for oil to be filtered and at least one outlet for filtered oil having passed through a filter medium in the cartridges,
- a clean oil tank (3) from which the rolling mill is supplied with rolling oil at the nominal flow rate,
and a method wherein particle-laden dirty rolling oil is collected in the dirty oil tank (2) and primary filtration of the oil in the dirty oil tank (2) is carried out by circulating the oil in parallel through the filter devices (1), and the filtered oil is collected in the clean oil tank (3),
and wherein counter-current cleanable filter cartridges are used, and the cartridges of a filter device (1) are unclogged using a fluid counter-current, while the other filter devices, arranged in parallel, filter the rolling oil, the unclogging operation generating sludge consisting of oil highly laden with metal particles and method wherein the sludge generated by the unclogging operation is conveyed into a secondary separation system (7), ensuring separation by settling of the oil and the particles contained in the sludge, obtaining a sludge concentrated in particles which is evacuated, and an oil free of particles is returned to the dirty oil tank (2), **characterized in that** the secondary separation system (7) by settling comprises:
- a buffer tank (70) configured to collect the sludge generated by the operation of unclogging primary filter cartridges,
- a settler (71) configured to ensure the sedimentation of the particles contained in the sludge in a bottom (712) of the settler, having a feed inlet (710) for the sludge and an outlet (711) for the settled oils,
- a motorized control device comprising at least one pump (72) configured to feed, at a controlled rate, the feed inlet of the settler (71) from sludge in the buffer tank (70) and wherein the sludge in the settler (71) is separated into particles which settle in the bottom (712) of the settler and into a particle-free oil which is evacuated through the outlet (711) at a flow rate controlled by said at least one pump (72) of the sludge feeding the settler so as to ensure continuous turbulence-free settling in the settler (71) between said feed inlet (710) and said outlet (711) of the settler, over a period greater than the time between two consecutive operations for unclogging two primary filter devices.

2. The method for recycling and filtering rolling oil according to claim 1, wherein said settler (71) has a useful volume between said feed inlet (710) and outlet (711), of capacity V, and wherein the feed rate D is regulated so that the average settling time equal to the ratio of V/D is greater than 10 hours, for example between 30 hours and 100 hours, such as 60 hours between said inlet (710) and outlet (711)

3. The method for recycling and filtering rolling oil according to one of claims 1 or 2, wherein the settler (71) comprises a single settling tank extending lengthwise along a longitudinal direction and wherein said feed inlet (710) for sludge is provided at a so-called proximal of the longitudinal ends of the settling tank, and the outlet (711) at the other so-called distal of the longitudinal ends.

4. The method for recycling and filtering rolling oil according to claim 3, wherein the settling tank is a tank without a partition transverse to the longitudinal direction between the inlet (710) for the sludge and the outlet for the settled oil (711).

5. The method for recycling and filtering rolling oil according to one of claims 3 or 4, wherein the tank has a V-shaped cross-section, along a plane perpendicular to the longitudinal direction, with two walls (713, 714) inclined towards each other converging towards the bottom (712) of the tank.

6. The recycling method according to one of claims 3 to 5, wherein a motorized, immersed conveyor (8) is arranged at the bottom of the settling tank and extends along the longitudinal direction (X) comprising scrapers (80) configured to scrape the bottom and return the sediment to an end where the sediment is drawn off, in particular at the proximal end.

7. The method for recycling and filtering rolling oil according to any one of claims 3 to 6, wherein the feed outlet (711) is an overflow defining the fluid volume in the settling tank.

8. The method for recycling and filtering rolling oil according to one of claims 1 to 7, wherein the filter devices (1) each comprise one or more trays (11, 12) in the internal volume of the tank (10), releasable, configured to be withdrawn from the tank through an upper opening closed by one or more covers, each of the trays (11, 12) releasably receiving filter cartridges, each of the hollow tray elements constituting a collector for the oil filtered by the cartridges of said tray, each of the tray elements comprising a filtered oil outlet (111, 121) releasably connected to a corresponding outlet of the tank via a fitting.

9. The method according to claim 8 having a single or even multiple trays (11, 12) which are then arranged side by side on a single level in the tank (10), with the cartridges suspended downwards, and so that the sludge generated by the fluid counter-flow falls directly to the bottom of the tank (10) of the filter device (1).

10. The method according to one of claims 1 to 9, wherein the secondary separation system (7) for separating sludge into concentrated sludge and into oil free of metal particles lacks a cartridge filter device so that secondary separation is achieved by settling only.

11. The method according to one of claims 1 to 10 wherein, when one of the filter devices is unclogged, the other filter devices with plate(s), arranged in parallel, ensure filtration of the rolling oil according to a filtration flow rate covering the nominal flow rate of the rolling mill for rolling operations, the flow of filtered oil to the dirty oil tank being always in excess of the nominal flow rate which is taken from the clean oil tank (3) to cool the rolling mill, even when the filtration flow rate is reduced by a filter device during its unclogging by a counter-current.

12. An installation for recycling and filtering rolling oil having a circuit comprising, in succession, according to the direction of flow of the oil:
- a dirty oil tank (2), collecting rolling oils from a rolling mill,
- a filter system (100) comprising a plurality of oil filter devices (1) configured to perform oil filtration in parallel, each filter device having a tank (10) accommodating a set of filter cartridges, the tank comprising an inlet for oil to be filtered and at least one outlet for filtered oil having passed through a filter medium in the cartridges, the filter cartridges being able to be cleaned by a counter-current,
- a clean oil tank (3),
- a system (9) for unclogging the cartridges of the filter devices (1), configured to implement a fluid counter-current on one of the filter devices (1), while the other filter devices, arranged in parallel, filter the rolling oil, the unclogging operation generating sludge consisting of oil highly laden with metal particles
- a secondary separation system (7), which separates the oil and particles contained in the sludge by settling, obtaining a particle-concentrated sludge which is evacuated, and a particle-free oil which is sent to the dirty oil tank (2),
**characterized in that** the secondary separation system (7) by settling comprises:
- a buffer tank (70) sized to collect the sludge generated by the operation for unclogging primary filter cartridges,
- a settler (71) configured to ensure sedimentation of the particles contained in the sludge in the bottom of the settler, having a feed inlet (710) for the sludge and an outlet (711) for the settled oils,
- a motorized control device comprising at least one pump (72) configured to feed, at a controlled flow rate, the settler (71), the feed inlet (711) of the settler (71) with sludge in the buffer tank (70), and wherein the secondary separation system (7) is configured to separate the sludge in the settler into particles that settle to the bottom of the settler and into oil free of particles by ensuring a controlled flow rate by said at least one pump (72) of sludge fed to the settler so as to guarantee continuous turbulence-free settling in the settler (71) over a period greater than the period separating two consecutive unclogging operations of two filter devices of the primary filtration.

13. The installation according to claim 12 wherein the settler comprises a single settling tank extending lengthwise along a longitudinal direction (X) and wherein said feed inlet (710) for sludge is provided at a so-called proximal of the longitudinal ends of the settling tank, the outlet (711) at the other so-called distal of the longitudinal ends.

14. The installation according to claim 13, wherein the settling tank is a tank lacking a partition transverse to the longitudinal direction (X) between the inlet (710) for the sludge and the outlet (711) for the settled oil.

15. The installation according to claim 13 or 14, wherein the tank has a V-shaped cross-section, along a plane perpendicular to the longitudinal direction, with two walls (713, 714) inclined towards each other and converging towards the bottom (72) of the settling tank.

16. The installation according to one of claims 13 to 15 wherein, a motorized conveyor (8), immersed, is arranged at the bottom of the settling tank and extends along the longitudinal direction (X) comprising scrapers (80) configured to scrape the bottom of the settling tank and return the sediment to an end where the sediment is drawn off, in particular the proximal end.

17. The installation according to one of claims 13 to 16 wherein the outlet (711) is an overflow defining the fluid volume in the settling tank of the settler (71).

18. The installation according to one of claims 12 to 17, wherein the filter devices (1) each comprise one or more trays (11, 12) in the internal volume of the tank, releasable, configured to be withdrawn from the tank through an upper opening closed by a lid, each of the tray elements releasably receiving filter cartridges, each of the hollow trays constituting a collector for the oil filtered by the cartridges of said tray, each of the trays comprising a filtered oil outlet (111, 121) releasably connected to a corresponding outlet of the tank via a fitting.

19. The installation according to claim 18 having a single tray or a plurality of trays which are then arranged side by side on a single level in the tank (10), with the cartridges suspended downwards, and so that the sludge generated by the fluid counter-current falls directly to the bottom of the tank (10) of the filter device (1).

20. The installation according to one of claims 12 to 19, wherein the tanks (10) of the filter devices (1) ensuring primary filtration, or even the buffer tank (70), are arranged above the settler (71) for secondary separation

21. The installation according to claims 13 and 20, wherein the tanks (10) of the filter devices (1), or even the buffer tank (70), are arranged in series above the settling tank of the settler (71) along the longitudinal direction (X) of the settling tank.

22. The installation according to claims 19 and 21, having a plurality of trays arranged side by side on a single level in the tank (10) and wherein the side-by-side trays are offset in the transverse direction (Y) to the settling tank of the settler (71).

23. The installation according to claim 21 or 22, wherein the adjacent tanks (10) of the filter devices (1) are rectangular in cross-section, along a horizontal plane, and extend in length along the transverse direction (Y) of the settling tank and in width along the longitudinal direction (X) of the settling tank of the settler (71)

24. The installation according to one of claims 21 to 23, wherein the settling tank of the settler (71) comprises, along the longitudinal direction (X) of the tank, a plurality of tank segments (S1, S2, S3, S4, S5, S6, S7) welded to one another, and with a pitch (Pa), along the longitudinal direction of the settling tank, corresponding to the dimension of a filter device (1), along the longitudinal direction (X), or even the size of the buffer tank (70) along the longitudinal direction, the segments (S1, S2, S3, S4, S5, S6, S7) forming the settling tank of the secondary separation, on the one hand, and the filter devices (1) or even the buffer tank (70) superimposed on the segments, on the other hand, each being respectively positioned so as to overlap one another along the longitudinal direction.

25. The installation according to one of claims 21 to 24, wherein the tanks (10) of the filter devices (1), or even also the buffer tank (70), are contained within the footprint of the settling tank of the settler (71)

26. The installation according to one of claims 12 to 25, wherein the dirty oil tank (2) is positioned in a cellar in the immediate vicinity of the rolling mill (M), giving access below the stand of the rolling mill (M) and while the filter devices (1) of the primary filtration system, on the one hand, and the settler (71) and buffer tank (70) of the secondary separation system, on the other hand, are located at a higher level.
